# EUROPEAN PATENT APPLICATION

(11) **EP 4 163 331 A1**
(43) Date of publication of application: **12.04.2023**
(21) Application number: 21200999.7
(22) Date of filing: 05.10.2021
(51) Int. Cl.: C08L 9/06, C08L 21/00, C08K 3/36

(54) **RUBBER COMPOUNDS FOR USE IN PRODUCING VEHICLE TIRES**

(71) Applicant: BRIDGESTONE CORPORATION, Chuo-ku Tokyo 104-8340 (JP)
(72) Inventor: DI RONZA, Raffaele, 00128 Roma (IT); AURISICCHIO, Claudia, 00128 Roma (IT); Blume, Anke, 7500 AE Enschede (NL); Bernal-Ortega, Maria del Pilar, 7500 AE Enschede (NL); Anyszka, Rafal, 7500 AE Enschede (NL); Morishita, Yoshihiro, Tokyo, 187-8531 (JP)
(74) Representative: Marchetti, Alessio

(57) **Abstract**

The invention provides diene rubber-silica compounds comprising a diene rubber matrix having dispersed therein a silica filler, wherein said silica filler is reversibly coupled to the diene rubber matrix via a dynamic imine bond. In particular, it provides such compounds in which the diene rubber is styrene-butadiene rubber. Such compounds can be vulcanized and are suitable for producing vehicle tire components, such as tire treads.

## Description

### Field of the Invention

The present invention relates to diene rubber compounds which can be recycled, to processes for their preparation, and their use in the manufacture of vehicle tires and vehicle tire components. In particular, it relates to the use of the compounds to produce tire treads.

More specifically, the invention relates to diene rubber compounds reinforced with silica in which a reversible interaction between the silica filler and the diene rubber is provided by a dynamic imine bond. This reversible interaction advantageously improves the recyclability of the rubber compounds whilst improving their mechanical performance.

### Background of the invention

Diene rubbers, such as natural rubber, isoprene rubber and butadiene rubber, comprise repeat units derived from diolefins having a conjugated carbon-carbon double bond. The properties of synthetic diene rubbers can be specifically tailored by copolymerisation of diolefin monomers with other monomers and they are used in a wide range of applications.

Styrene-butadiene rubber (referred to herein as "SBR") is one example of a butadiene rubber produced by polymerisation of styren-43e and butadiene. The ratio of styrene to butadiene influences the properties of the polymer and various types of SBR find use in the automotive industry, particularly as components of car tires such as tire treads. When used in the manufacture of tire treads, SBR is typically cross-linked using the sulfur vulcanisation system. Its mechanical properties are improved using various reinforcing fillers, such as silica and carbon black. Carbon black was the first material in common use as a filler, but more recently silica has largely replaced the traditional use of carbon black in SBR-based compounds. The use of silica fillers improves rubber properties such as lowering rolling resistance and improving traction, particularly on wet surfaces. Other diene rubbers, including butadiene rubber (BR), natural rubber (NR), isoprene rubber (IR), epoxidised natural rubber (ENR), acrylonitrile-butadiene rubber (NBR), chloroprene rubber (CR), isobutylene-isoprene rubber (IIR), styrene-isoprene-butadiene rubber (SIBR) and ethylene-propylene-diene rubber (EPDM) are also commonly used to produce components in the automotive industry. As with SBR-based compounds, the mechanical properties of rubber compounds made from any diene rubber may similarly be improved by the incorporation of reinforcing fillers such as silica.

Dispersion of any reinforcing filler and the filler-rubber interaction are key when preparing high performance rubber compounds having the required mechanical properties. The presence of polar silanol groups on the surface of silica makes it acidic and moisture adsorbing which can lead to its aggregation and thus poor dispersion in the rubber matrix, causing high compound viscosity and loss of reinforcing properties. Various treatments of silica have been proposed to tailor its surface chemistry, such as the use of silanes as surface modifiers or "compatibilizing agents". Silane coupling agents, such as bis(3-triethoxysilylpropyl)tetrasulfide (TESPT) and bis(3-triethoxysilylpropyl)disulfide (TESPD), are also used to form covalent bonds between silica and diene rubber chains, for example chains of SBR. These improve filler dispersion in the diene rubber matrix and strengthen the interaction between silica and rubber to reinforce the rubber compounds.

Vehicle tires have a limited lifespan due to general wear and tear, and degradation of the tire tread, etc. and can present a significant problem as a waste material. They take up valuable space in landfill sites and do not generally biodegrade. There is therefore an ongoing need to improve the sustainability of rubber compounds used in the manufacture of tires. The ability to recycle such materials for use as a secondary raw material which can be mixed with other new raw materials is the subject of much research. One of the most difficult types of tire material to recycle is diene rubber filled with silica, such as SBR-silica, due to the existence of strong covalent bonds between the rubber chains and the silica filler formed by silane coupling agents. In order to recycle such materials, it is necessary to break the covalent bonds since any remaining covalent bonds inhibit flow, compatibility, and can co-cross link when the recycled materials are mixed with other new polymers. That makes recycling difficult and generally uneconomical.

There are two types of covalent bond present in conventional diene rubbers which are reinforced with silica, such as SBR-silica compounds. One is the sulfur cross-links which arise from the sulfur vulcanisation system used to harden the rubber. The other is the covalent coupling between the diene rubber chains and silica via the use of silane coupling agents such as those described above. It is these covalent interactions which severely restrict the re-use of rubbers, such as SBR-silica compounds, as raw materials due to the large amount of energy required to break the covalent bonds.

Although silica-containing diene rubber compounds, such as SBR-silica compounds, have become preferred for use in the manufacture of passenger car tires, there is thus a need for alternative ways of coupling silica fillers and diene rubber which can provide rubber compounds that maintain, or improve, tire performance properties whilst improving their recyclability.

### Summary of the invention

The inventors now propose a reversible coupling system for silica-containing diene rubber compounds in which the silica filler is coupled to the diene rubber via a dynamic imine bond. It is proposed that this coupling system can effectively replace covalent silane coupling in conventional diene rubber-silica compounds thereby enabling the compounds to be recycled more readily whilst still retaining their desired mechanical properties.

Specifically, the inventors propose coupling of the silica filler and the polymeric chains of the diene rubber via a coupling agent which is attached both to the surface of the silica and to the polymeric chains of the diene rubber and which includes a dynamic imine bond in its backbone. This dynamic imine bond is a "reversible" covalent bond, i.e. it can disassemble and reassemble, thus providing the desired reversibility of the coupling between the silica and the diene rubber chains. This aids in recycling and reprocessing of the diene rubber compounds. Whilst not being bound by theory, the dynamic nature of the imine bond is also believed to allow it to effectively "re-connect" if it "disconnects" as a result of any mechanical damage to the rubber compound during use. Any disruption of the bond which may arise from micro-cracks or micro-tears in the rubber compound can thus be re-assembled without the need for any external stimulus, thereby automatically restoring the desired mechanical performance of the compound. The precise temperature conditions for re-assembly will depend on the chemical structure of the components that form the dynamic imine bond. In some cases, re-assembly may occur at ambient temperature. In the case where higher temperatures are required to re-assemble the bond these can generally be expected to arise during the conditions of use, for example the increased temperature of a tire tread during rolling may aid in the re-assembly performance of the rubber compound.

The silica filler can be "pre-modified" (i.e. pre-prepared) by attachment of the coupling agent to its surface prior to dispersion in the diene rubber matrix. The coupling agent incorporates the dynamic imine bond and a functional moiety capable of binding, either directly or indirectly, to the polymeric chains of the diene rubber to form the reversible coupling system during compounding and/or vulcanization. Alternatively, the coupling system may be formed entirely in-situ as part of the compounding and/or vulcanisation process to produce the rubber compound. In-situ formation of the reversible coupling system involves in-situ surface modification of the silica filler and its linkage to the diene rubber chains.

Dynamic covalent bonds are covalent bonds that can reversibly assemble and disassemble, i.e. they provide reversible chemical bonds. Dynamic imine bonds which form between an aldehyde and a primary amine are one example of a dynamic covalent bond in which a dynamic equilibrium exists between the aldehyde, the amine and the imine. Silicone elastomers have been proposed in which a cross-linked network formed from dynamic imine bonds can be self-healed at elevated temperatures as well as recycled by hot pressing (see, for example, Zhao et al., Molecules, 2020, 25, 597 and Feng et al., Ind. Eng. Chem. Res., 2019, 58, 1212-1221). To date, there has been no suggestion that this type of bond may be used in a composite material in which other components may potentially interfere with the self-healing properties of the dynamic imine bonds.

The inventors now propose the use of a dynamic imine bond to introduce a reversible interaction between a silica filler and a diene rubber matrix in order to improve the recyclability of rubber compounds used in the manufacture of vehicle tires and vehicle tire components. Contrary to expectation, they have found that other components present in such rubber compounds do not adversely affect the dynamic nature of the imine bond and its ability to disassemble and reassemble. Indeed, surprisingly, the inventors have found that coupling of the silica and diene rubber via a dynamic imine bond improves certain mechanical properties of diene rubber compounds compared to those known for use in tire manufacture which employ conventional silane coupling agents. Notably, the tensile strength of the rubber compounds is improved compared to rubber compounds which employ the bifunctional silane coupling agent TESPD.

The present invention thus solves the problems relating to known rubber-silica compounds by providing a coupling system which not only retains and/or improves the key performance characteristics of the rubber products, but which enhances their recyclability.

In one aspect the invention thus provides a diene rubber-silica compound comprising a diene rubber matrix having dispersed therein a silica filler, wherein said silica filler is reversibly coupled to the diene rubber matrix via a dynamic imine bond.

In another aspect, the invention provides a process for producing a diene rubber-silica compound as herein described, said process comprising coupling a silica filler to a diene rubber matrix via a dynamic imine bond.

In another aspect, the invention provides a vulcanizable rubber composition comprising a diene rubber matrix having dispersed therein a silica filler, wherein said silica filler is reversibly coupled to the diene rubber matrix via a dynamic imine bond.

In another aspect, the invention provides a vulcanized rubber compound obtained by, directly obtained by, or obtainable by cross-linking a vulcanizable rubber composition as herein described.

In another aspect, the invention provides a process for producing a vulcanized diene rubber-silica compound comprising a diene rubber matrix having dispersed therein a silica filler that is reversibly coupled to said diene rubber matrix via a dynamic imine bond, said process comprising the steps of:
(i) surface-modifying a silica filler by attachment of a coupling agent which incorporates a dynamic imine bond and which is capable of forming a linkage to a diene rubber matrix during compounding and/or vulcanisation;
(ii) compounding the resulting surface-modified silica filler with a diene rubber matrix whereby to produce a vulcanizable rubber composition; and
(iii) subjecting said vulcanizable rubber composition to vulcanization.

In another aspect, the invention provides process for producing a vulcanized diene rubber-silica compound comprising a diene rubber matrix having dispersed therein a silica filler that is reversibly coupled to said diene rubber matrix via a dynamic imine bond, said process comprising the steps of:
(i) incorporating a silica filler into a diene rubber matrix, together with one or more compounds capable of reaction with said silica filler to provide a surface-modified silica filler having attached thereto a coupling agent which incorporates a dynamic imine bond and which is capable of forming a linkage to said diene rubber matrix during compounding and/or vulcanisation;
(ii) compounding the resulting composition whereby to produce a vulcanizable rubber composition comprising said surface-modified silica filler; and
(iii) subjecting said vulcanizable rubber composition to vulcanization.

In another aspect, the invention provides a vulcanized diene rubber-silica compound obtained by, directly obtained by, or obtainable by a process as herein described.

In another aspect, the invention provides the use of a diene rubber-silica compound as herein described as a component of a vehicle tire or in the manufacture of a component of a vehicle tire.

In another aspect, the invention provides a vehicle tire component made from a diene rubber-silica compound as herein described.

In another aspect, the invention provides a vehicle tire comprising a vehicle tire component as herein described.

In another aspect, the invention provides a method of recycling a diene rubber-silica compound as herein described, said method comprising the step of de-vulcanising said compound; and optionally recovering the diene rubber.

In another aspect, the invention provides a silica filler which is surface-modified by attachment of a coupling agent capable of forming a linkage to a diene rubber, wherein said coupling agent incorporates a dynamic imine bond.

In another aspect, the invention provides a process for producing a surface-modified silica filler as herein described, said process comprising the step of chemically modifying silica by attachment of a coupling agent capable of forming a linkage to a diene rubber, and wherein said coupling agent incorporates a dynamic imine bond.

### Detailed Description of the invention

In one aspect the invention relates to a diene rubber-silica compound comprising a diene rubber matrix having dispersed therein a silica filler, wherein said silica filler is reversibly coupled to the diene rubber matrix via a dynamic imine bond.

Unless otherwise specified, the terms "rubber compound" and "rubber composition" are used interchangeably herein and refer to a rubber which is blended or mixed (i.e. compounded) with various components or materials. A "diene rubber-silica compound" refers to a diene rubber which is mixed with a silica filler.

The invention relates to diene rubber compounds and diene rubber compositions both in the raw state (i.e. before curing or vulcanisation) and in the cured or vulcanised state, i.e. after cross-linking or vulcanisation.

As used herein, the term "diene rubber" refers to a rubber comprising repeat units derived from at least one conjugated diolefin monomer. It includes homopolymers and copolymers having one or more additional units derived from monomers copolymerisable with the diolefin monomer(s). The repeat units have a carbon-carbon double bond which may be present in the backbone and/or in a side-chain of the polymer. A diene rubber may be natural or synthetic. Non-limiting examples of diene rubbers include butadiene rubber (BR), natural rubber (NR), isoprene rubber (IR), epoxidized natural rubber (ENR), acrylonitrile-butadiene rubber (NBR), chloroprene rubber (CR), isobutylene-isoprene rubber (IIR), styrene-butadiene rubber (SBR), styrene-isoprene-butadiene rubber (SIBR) and ethylene-propylene-diene rubber (EPDM).

In one embodiment, the diene rubber for use in the invention contains repeat units derived from butadiene. Examples of such rubbers include, but are not limited to, styrene butadiene rubber (SBR) and butadiene rubber (BR). In one set of embodiments, the diene rubber for use in the invention is SBR.

The term "dynamic imine bond" as used herein refers to an imine bond (-N=CH-) which, in the presence of water, is in equilibrium with the corresponding aldehyde and primary amine. As will be understood, the nature of the aldehyde and primary amine, and thus the chemical structure of the neighbouring groups in the resulting imine bond, will influence its dynamic nature. Whilst it is envisaged that any known dynamic imine bond may be employed in the invention, this will typically be formed by reaction of an aromatic or heteroaromatic aldehyde and a primary amine. For example, it may be formed by reaction of an optionally substituted benzaldehyde and a primary amine, or by reaction of an optionally substituted pyridine carboxaldehyde and a primary amine. The resulting imine bond will form part of a "dynamic imine group" which may, for example, have the structure -N=CH-X- in which X is an optionally substituted arylene or heteroarylene group.

The dynamic nature of an imine group may be illustrated by way of the following non-limiting reaction scheme in which the imine group is in equilibrium with a primary amine and benzaldehyde:

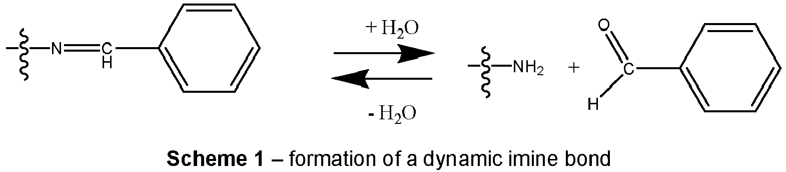

In the present invention, it is proposed that the dynamic imine bond forms part of the coupling system which serves to link the silica filler to the polymeric chains of the diene rubber matrix. Specifically, it forms a component of the backbone of the coupling agent such that its dynamic nature provides the desired reversible interaction to improve recyclability of the diene rubber-silica compound. As will be understood, the "dynamic imine group" as herein defined also forms part of the coupling system.

It is intended that the primary interaction between the silica and diene rubber matrix in the rubber compounds herein described is a reversible interaction provided by the dynamic imine bond. However, other interactions between the silica and diene rubber matrix may be present, including other covalent and non-covalent interactions. However, the presence of any additional covalent interactions that are non-reversible should be minimised to achieve the desired aim of recyclability of the rubber compounds. In one embodiment, there will be a substantial absence of any non-reversible covalent interactions between the silica and the diene rubber chains, such as those arising from the presence of conventional coupling agents such as bifunctional silanes. By "substantial absence" is meant that the extent of such non-reversible covalent bonding between the silica and diene rubber chains is less than 1 mol of covalent linkages per 1 mol of diene rubber, preferably less than 0.5 mol per 1 mol, e.g. less than 0.3 mol per 1 mol. It may be understood that the rubber compounds will be substantially free from (e.g. free from) any coupling agents which covalently bind the silica to the diene rubber via a non-reversible interaction. Other reversible non-covalent interactions which may be present between the silica and the diene rubber chains can include any of the following and combinations thereof: electrostatic, van der Waals forces, hydrogen bonding and hydrophobic effects. In one embodiment, however, the only interaction will be via a coupling moiety that incorporates a dynamic imine bond (or dynamic imine group) as herein described.

The term "silica filler" as used herein refers to particulate silica. Any known type of particulate silica capable of reinforcing a diene rubber matrix may be used in the invention. As will be understood, known silica materials typically contain a proportion of other components (e.g. as impurities), but the main component will be silicon dioxide, i.e. SiO₂. The content of silicon dioxide will generally be at least 90 wt.%, preferably at least 95 wt.%, e.g. at least 97 wt.%.

Silica materials for use in the invention are well known in the art and include, in particular, precipitated silica (an amorphous form of silica), pyrogenic (fumed) silica, wet silica (hydrous silicic acid), dry silica (silicic anhydride), calcium silicate and aluminium silicate. A single silica or combination of two or more types of silica may be used. The silica is used in the form of discrete particles, i.e. as a granulate which is highly dispersible. It may be monodisperse in size and uniform in shape. Alternatively, it may be provided in the form of branched or linear clusters. Precipitated silica is preferred in view of its ability to impart to tread compounds excellent rolling resistance and wet traction. Silica for use in the invention may have a specific surface area (e.g. nitrogen-specific absorption surface area) in the range of from 50 to 350 cm²/g, preferably from 80 to 280 cm²/g, for example from 120 to 230 cm²/g. The average particle size of the silica may range from about 5 nm to about 50 nm, preferably from about 8 nm to about 35 nm, e.g. from about 10 nm to about 28 nm. Commercial grades of silica for use in the invention are widely available from suppliers such as Evonik (Germany) and include, for example, Ultrasil^{®} 7000 GR and Ultrasil^{®} VN3.

The silica for use in the invention is reversibly coupled to the diene rubber matrix via a dynamic imine bond. A coupling agent incorporating the dynamic imine bond forms a bond to the silica surface and to the polymeric chains of the diene rubber thereby serving to link these moieties. As herein described, the silica may be "pre-modified" by linkage to a coupling agent that incorporates the dynamic imine bond or the silica may be modified in-situ. By "linkage" it is intended that the silica is attached to the coupling agent by at least one type of chemical or physical interaction which is attractive. In one embodiment, the silica is chemically bound to the coupling agent. For example, it may be chemically bound via covalent or non-covalent bonding (e.g. hydrogen bonding or electrostatic bonding). Alternatively, the silica may be attached to the coupling agent by a physical interaction, for example by van der Waals forces, a dipole-dipole interaction, a dipole-induced dipole interaction, a reversible click-bond or hydrophobic effects. Typically, the silica will be covalently bound to the coupling agent.

The coupling agent is also capable of linking to the polymeric chains of the diene rubber. Linkage to the diene rubber may be direct or it may be indirect, for example via a cross-linker such as a sulphide bridge. Generally, the coupling agent will be capable of reaction with the diene rubber to form a chemical linkage, typically a covalent linkage. Conveniently, covalent linkage of the coupling agent to the diene rubber matrix may be effected during compounding of the rubber, for example during high temperature mixing of the rubber components, and/or during the vulcanisation step. Where linkage is effected during vulcanisation, the coupling agent may react with sulphur to form a sulphide bridge to the polymeric chains of the diene rubber matrix.

In one embodiment the silica is pre-modified to carry the coupling agent. In this embodiment the silica is surface-modified by linkage to at least one coupling agent as herein described. The silica may be surface-modified in this way to carry a plurality of coupling agents. Where more than one coupling agent is present, these may be the same or different. Typically, however, where a plurality of coupling agents are present these will be the same chemical entity.

In some embodiments, the silica surface may also be modified by attachment of one or more additional functional groups. Such functional groups may be non-polar or polar in nature and suitable groups may readily be selected by those skilled in the art. The silica may, for example, be surface-treated to decrease the filler-filler interaction during compounding and thus to improve its dispersibility in the rubber matrix. Compatibilizing agents (also known as "covering agents") suitable for this purpose are well known in the art and include, but are not limited to, monofunctional silanes such as hexadecyltrimethoxysilane or propyltriethoxysilane. Other non-polar species which may be attached to the surface of the silica particles include aromatic groups and saturated aliphatic hydrocarbons. In some embodiments, the silica surface may be functionalised with one or more polar functional groups such as those containing amine or carboxyl groups.

In one embodiment, the silica for use in the invention will only be modified with one or more coupling agents as herein described, i.e. no other types of functional group will be bound to its surface.

Each coupling agent which is attached to the silica surface will contain at least one dynamic imine bond as herein described. Each coupling agent may contain more than one dynamic imine bond, for example 2 or 3 such bonds. As will be understood, each dynamic imine bond will form part of a "dynamic imine group" as herein defined to provide the required reversible nature of the imine bond.

Where more than one dynamic imine bond is present in a coupling agent, these may each be provided in the form of the same or different dynamic imine groups. Multiple dynamic imine bonds may be formed by coupling multiple primary amine groups (e.g. 2 or 3 primary amine groups) to multiple aryl and/or heteroaryl groups that each carry an aldehyde group. In this case, each aryl and/or heteroaryl group present in the coupling agent may be the same or different. In other cases, multiple dynamic imine bonds may be formed between more than one primary amine group (e.g. 2 or 3 primary amine groups) and a single aryl or heteroaryl group which carries more than one (e.g. 2 or 3) aldehyde groups capable of forming a dynamic imine bond.

In one embodiment, the coupling agent for use in the invention will contain a single dynamic imine bond which is part of a single dynamic imine group as herein defined.

It is envisaged that a range of coupling agents incorporating at least one dynamic imine bond may be employed in the invention. The precise nature of the coupling agent is not critical provided it is capable of linking (e.g. covalently linking) to the silica filler and linking (directly or indirectly) to the diene rubber matrix. As will be appreciated, the coupling agent should not include any components which will impact the performance of the rubber compound, for example any groups that may adversely interact with the diene rubber matrix. Suitable coupling agents can readily be determined by those skilled in the art having in mind their intended function.

The coupling agent is attached to the surface of the silica. In one embodiment, it is attached to the surface of the silica via at least one covalent bond, i.e. it is covalently bound. In one embodiment, it may be attached by more than one covalent bond, for example by two covalent bonds. However, typically it will be attached by a single covalent bond. Due to the nature of the surface of silica which carries a plurality of silanol groups, the coupling agent will generally be bound to the silica via a siloxane linkage.

Typically, the coupling agent will be an organic group having a backbone chain containing up to 16 atoms, preferably up to 12 atoms, and which incorporates the dynamic imine bond as herein described. It may, for example, contain up to 16 carbon atoms, for example up to 12 carbon atoms. Coupling agents may be linear or branched and they may carry one or more substituent groups. Typically, the coupling agent may be linear.

The coupling agent may, for example, have a structure in accordance with formula (I): 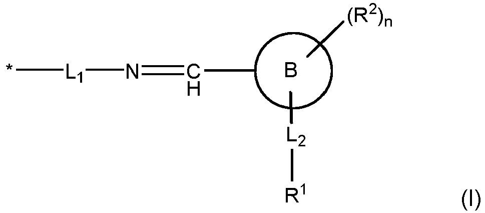 wherein:
* denotes the point of attachment of the coupling agent to the silica surface;
ring B is an aromatic or heteroaromatic group;
L₁ is an organic linking group;
L₂ is either a direct bond or an organic linking group;
R¹ is a functional moiety capable of forming a bond (e.g. a covalent bond) to a diene rubber;
each R² is independently selected from:
   - C₁₋₆ alkyl (preferably C₁₋₃ alkyl, e.g. -CH₃),
   - C₁₋₆ alkoxy (preferably C₁₋₃ alkoxy, e.g. -OCH₃),
   - halogen (e.g. F, CI, Br or I), and
   - a group of formula -L₂-R¹; and
n is an integer from 0 to 4, preferably 0 to 2, e.g. 0 or 1.

In one embodiment of formula (I), ring B may be an aromatic group. For example, it may be a phenyl ring. The coupling agent may, for example, have a structure in accordance with formula (II): 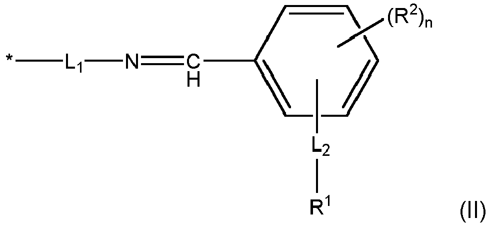 wherein *, L₁, L₂, R¹, R² and n are as defined herein.

In another embodiment of formula (I), ring B may be a heteroaromatic group. For example, it may be a 5- or 6-membered heteroaromatic ring. Suitable heteroaromatic rings may include one or more oxygen, nitrogen or sulphur atoms. Those containing at least one nitrogen atom are generally preferred and include pyridine rings such as 2-pyridyl.

In one embodiment of formula (I) and formula (II), each R² is independently selected from C₁₋₆ alkyl (preferably C₁₋₃ alkyl, e.g. -CH₃), C₁₋₆ alkoxy (preferably C₁₋₃ alkoxy, e.g. - OCH₃), and a group of formula -L₂-R¹. In another embodiment, each R² is independently selected from C₁₋₆ alkyl (preferably C₁₋₃ alkyl, e.g. -CH₃), and C₁₋₆ alkoxy (preferably C₁₋₃ alkoxy, e.g. -OCH₃).

In one embodiment of formula (I) and formula (II), n is 0. As will be understood, where n is 0, R² is absent.

The precise nature of the organic linking groups L₁ and L₂ is not critical and suitable groups may readily be determined by those skilled in the art.

Typically, the linking group L₁ will be an organic group having a backbone chain containing up to 14 atoms, preferably up to 12 atoms, for example from 2 to 8 atoms. It may, for example, contain up to 12 carbon atoms, for example from 2 to 8 carbon atoms. Linking groups may be linear or branched and they may carry one or more substituent groups. The linking group L₁ may, for example, be represented by a group of formula (III): 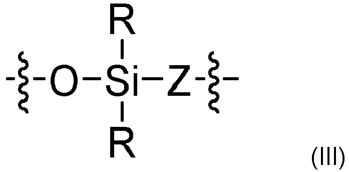 in which
each R is independently selected from -OH, C₁₋₆ alkoxy (preferably C₁₋₃ alkoxy) and C₁₋₆ alkyl (preferably C₁₋₃ alkyl); and
Z is an optionally substituted C₁₋₁₂ alkylene group which may be interrupted by one or more groups selected from -O-, -SiR'₂- (in which each R' is independently
-OH, C₁₋₆ alkoxy or C₁₋₆ alkyl), -PR"-, -NR"- and -OP(O)(OR")O- (in which R" is H or C₁₋₆ alkyl, preferably C₁₋₃ alkyl, e.g. methyl).

In one set of embodiments, each R in formula (III) is independently selected from -OH, C₁₋₃ alkoxy and C₁₋₃ alkyl. For example, each R may independently be selected from -OH, C₁₋₂ alkoxy (e.g. -OCH₃) and C₁₋₂ alkyl (e.g. -CH₃). Typically, all R groups may be -OH.

In one set of embodiments, group Z in formula (III) may be an optionally substituted C₁₋₁₂ alkylene, preferably C₁₋₈ alkylene, for example C₁₋₆ alkylene or C₁₋₃ alkylene. Optional substituents include, for example, -OH and -NR"₂ (where each R" is independently H or C₁₋₆ alkyl, preferably H). In one set of embodiments, group Z in formula (III) is unsubstituted.

In one set of embodiments, L₂ in formula (I) or formula (II) is a direct bond, i.e. a direct covalent bond. Where L₂ is a direct bond, the functional moiety R¹ is directly linked to ring B, e.g. to the phenyl ring.

In other embodiments, the linking group L₂ in formula (I) or formula (II) may be an organic group having a backbone chain containing up to 14 atoms, preferably up to 12 atoms, for example from 2 to 8 atoms. It may, for example, contain up to 12 carbon atoms, for example from 2 to 8 carbon atoms. Linking group L₂ may be linear or branched and it may carry one or more substituent groups. Typically, linking group L₂ may be linear. L₂ may, for example, be an optionally substituted C₁₋₁₂ alkylene group, preferably C₁₋₆ alkylene group, e.g. C₁₋₃ alkylene group, which may be interrupted by one or more -O- atoms. In one embodiment, L₂ may be a group of the formula -O-CH₂- .

In formula (I) or formula (II), R¹ is a functional moiety capable of forming a covalent linkage to a polymeric chain of a diene rubber. Covalent linkage may be direct (i.e. via a direct covalent bond) or it may be indirect, i.e. via a cross-linker or cross-linking agent that covalently couples the functional moiety to the polymeric chains of the diene rubber. In one embodiment, R¹ will be a functional moiety capable of forming a covalent linkage to at least one unsaturated (i.e. olefinic) component of the diene rubber. In another embodiment, R¹ can be a functional moiety capable of forming a covalent linkage to a functional group present in the diene rubber.
In certain embodiments, R¹ is a functional moiety which can directly react with a polymeric chain of a diene rubber or with a functional group present in the diene rubber during compounding, for example during high temperature mixing of the rubber components to produce the rubber compound. For example, R¹ may be a functional moiety which can directly react with at least one -C=C- bond in the diene rubber during compounding. In other embodiments, R¹ is a functional moiety which can react indirectly with a polymeric chain of a diene rubber or with a functional group present in the diene rubber, for example in the presence of sulphur during vulcanisation. R¹ may, for example, be a functional moiety capable of forming an indirect covalent linkage with at least one -C=C- bond in the diene rubber. Suitable R¹ moieties can readily be determined by those skilled in the art having in mind their intended function and include moieties that are widely used in coupling agents used to link silica fillers to a diene rubber, such as reactive moieties present in conventional silane coupling agents.

Functional moieties capable of direct reaction with unsaturated carbon-carbon bonds in a diene rubber include groups that can react without the need for further modification as well as groups that are modified in-situ to produce the desired reacting group. In one embodiment, the functional moiety R¹ is a mercapto group (-SH) or a protected or blocked mercapto group.

A mercapto group (-SH) is capable of reacting directly with -C=C- groups in diene rubber without further modification and reacts to form a sulphur bridge to the diene rubber chains at high temperature, for example at temperatures typically employed in the compounding of the diene rubber. Protected mercapto groups are well known in the art. They are mercapto derivatives in which the mercapto group is "protected", i.e. the mercapto hydrogen is replaced by another group (a "protecting group"). Such groups include groups in which a protecting group is linked to the sulphur of the mercapto group and can be cleaved under the conditions employed during the compounding process to produce a mercapto group. Examples of protected mercapto groups include -SR in which R is a short-chained, straight or branched alkyl group such as C₁₋₆ alkyl, preferably C₁₋₃ alkyl, e.g. methyl. In one embodiment, the functional moiety R¹ may be -SCH₃.

Blocked mercaptosilane coupling agents are generally known for use in filled diene rubber compounds. Any of the blocked mercapto groups known for use in such agents may be used in the invention. Such groups are mercapto derivatives in which the mercapto group is "blocked", i.e. the mercapto hydrogen atom is replaced by another group (a "blocking group"). Such groups include a blocking group linked to the sulphur, for example a carbonyl, sulfonyl, sulfinyl, phosphonyl or phosphinyl group. In such groups, the mercaptan group is initially non-reactive due to the presence of the blocking group, i.e. the blocking group substantially prevents the functional moiety from coupling to the diene rubber during compounding of the rubber. In this way, any undesirable premature curing of the rubber and the associated undesirable increase in viscosity during mixing may be avoided. When reaction of the rubber mixture to couple the silica filler to the diene rubber is desired, a deblocking agent can be added to deblock the blocked mercapto group. If alcohol or water is present in the mixture, a catalyst such as a tertiary amine or Lewis acid may be used to effect removal of the blocking group by hydrolysis or alcoholysis. Alternatively, the deblocking agent may be a nucleophile containing a hydrogen atom capable of exchange with the blocking group. Examples of such nucleophilic groups include amines containing an N-H bond, for example primary and secondary amines, imines or guanidines. Such components are widely used as components of the curing system used in the production of diene rubbers and include, for example, N,N'-diphenylguanidine (DPG). Any known blocked mercapto group can be used as the functional moiety R¹ in the coupling agents for use in the invention. One example of a blocked mercapto group is a group of the formula -S-C(O)-C₅H₉ which is present in the NXT^{™} silane coupling agent.

Other functional moieties that are capable of direct reaction with unsaturated carbon-carbon bonds in a diene rubber include groups which contain mono-, di- or poly-sulphidic groups. Such moieties include a group of the formula -(S)ₓ- in which x is an integer from 1 to 6. For example, x may be 1 to 4, e.g. 1, 2 or 4. Examples of such functional moieties include -(S)ₓ-R in which R is a short-chained, straight or branched alkyl group such as C₁₋₆ alkyl, preferably C₁₋₃ alkyl, e.g. methyl. The mono-, di- or poly-sulfidic group may be linked directly to the aromatic or heteroaromatic ring in formula (I) or formula (II), or it may be connected via the linker, L₂. When connected directly to the ring (i.e. in the absence of the linker), the sulphidic group will generally be more reactive.

Functional moieties capable of reaction with a functionalised diene rubber can readily be determined by those skilled in the art having in mind the nature of the functional group attached to the polymeric chains of the rubber. In one embodiment, R¹ may be an amino group that can react with a carboxylated diene rubber. For example, R¹ may be a primary or secondary amine. Examples of such groups include those of formula - NHR^{x} wherein R^{x} is H, C₁₋₆ alkyl or aryl.

Functional moieties capable of indirect covalent linkage to the diene rubber include moieties that are able to couple to the polymeric chains of the diene rubber via a cross-linking group produced during the step of vulcanisation. For example, such moieties can react with sulphur during vulcanisation to produce a sulphide bridge to at least one -C=C- bond in the diene rubber. Examples of functional groups capable of forming a sulfide bridge to the diene rubber include those groups containing olefinic unsaturation, for example groups containing one or more -C=C- bonds. Such bonds may be provided as terminal or non-terminal bonds in the functional moiety R¹. Examples of functional moieties that contain a terminal -C=C- bond include vinyl and allyloxy.

In formula (I) and formula (II), the group -L₂-R¹ may be present at any position on the aromatic or heteroaromatic ring. For example, where ring B is a phenyl ring, the group -L₂-R¹ may be ortho-, meta- or para- with respect to the point of attachment of the imine bond. Depending on the nature and positioning of the group -L₂-R¹, it may affect the strength of the imine bond via resonance and/or inductive effects and therefore influence its dynamic nature, i.e. how readily it disassembles and reassembles. The nature and position of this group on the phenyl ring may therefore be selected accordingly. Its position on the ring may also take account of steric considerations given the need for this to be capable of forming the desired linkage to the diene rubber. Taking account of steric considerations, positioning of the group -L₂-R¹ at the para-position on the phenyl ring may be advantageous, for example. In one set of embodiments, the coupling agent may therefore be provided by the following structure of formula (IV): 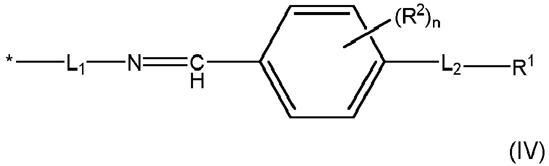 wherein *, L₁, L₂, R¹, R² and n are as herein defined.

In one embodiment, the coupling agent has a structure of formula (V): 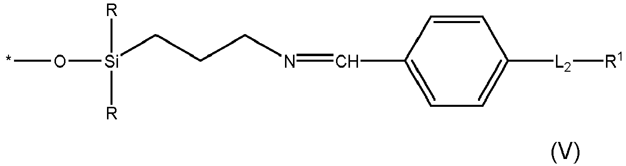 wherein:
* denotes the point of attachment of the coupling agent to the silica surface;
each R is independently selected from -OH, C₁₋₆ alkoxy (preferably C₁₋₃ alkoxy) and C₁₋₆ alkyl (preferably C₁₋₃ alkyl); and
L₂ and R¹ are as herein defined.

Non-limiting examples of the group -L₂-R¹ in formula (I), (II), (IV) or (V) in which the functional moiety R¹ comprises a terminal -C=CH bond include the following: 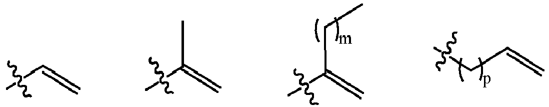 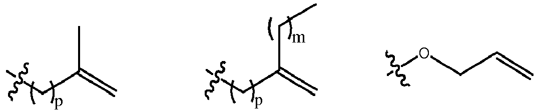 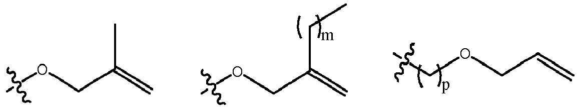 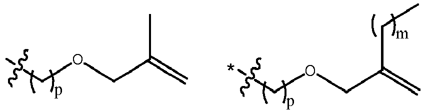 wherein:
p is an integer from 1 to 6, preferably from 1 to 4, e.g. 1 or 2; and
m is an integer from 1 to 6, preferably from 1 to 4, e.g. 1 or 2.

Non-limiting examples of the group -L₂-R¹ in formula (I), (II), (IV) or (V) in which the functional moiety R¹ comprises a mercapto or protected mercapto group include the following: 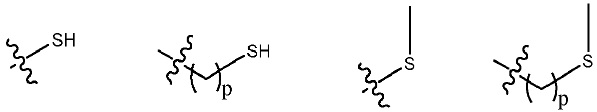 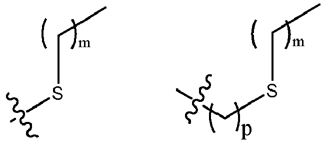 wherein:
p is an integer from 1 to 6, preferably from 1 to 4, e.g. 1 or 2; and
m is an integer from 1 to 6, preferably from 1 to 4, e.g. 1 or 2.

Non-limiting examples of the group -L₂-R¹ in formula (I), (II), (IV) or (V) in which the functional moiety R¹ comprises a mono-, di- or poly-sulfidic group include the following: 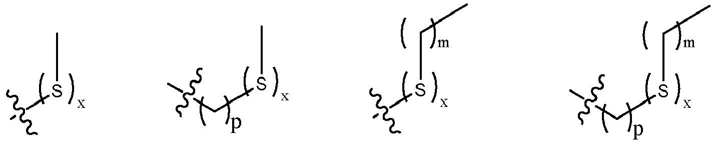 wherein:
x is an integer from 1 to 6, preferably from 1 to 4;
p is an integer from 1 to 6, preferably from 1 to 4, e.g. 1 or 2; and
m is an integer from 1 to 6, preferably from 1 to 4, e.g. 1 or 2.

Non-limiting examples of the group -L₂-R¹ in formula (I), (II), (IV) or (V) in which the functional moiety R¹ comprises a blocked mercapto group include the following: 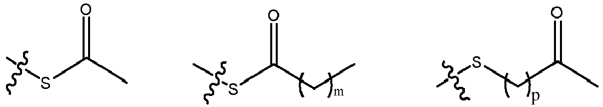 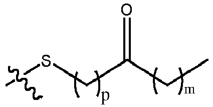 wherein:
p is an integer from 1 to 6, preferably from 1 to 4, e.g. 1 or 2; and
m is an integer from 1 to 8, preferably from 1 to 6, e.g. from 1 to 4.

In a preferred embodiment, -L₂-R¹ in formula (I), (II), (IV) or (V) is selected from vinyl (-CH=CH₂), allyloxy (-O-CH₂-CH=CH₂), thiol (-SH) and methylthiol (-SCH₃). In a more preferred embodiment, -L₂-R¹ is vinyl, thiol or methylthiol.

The term "alkyl" as used herein refers to a monovalent saturated, linear or branched, hydrocarbon chain. It may be substituted or unsubstituted. Where more than one substituent group is present, these may be the same or different.

Examples of alkyl groups include, but are not limited to, methyl, ethyl, n-propyl, isopropyl, n-butyl, iso-butyl, sec-butyl, tert-butyl, n-pentyl, iso-pentyl, neo pentyl, n-hexyl, etc. An alkyl group preferably contains from 1-6 carbon atoms, e.g. 1-4 carbon atoms.

The term "alkoxy" as used herein refers to an -O-alkyl group, wherein alkyl is as defined herein. Examples of alkoxy groups include, but are not limited to, methoxy, ethoxy, propyloxy, etc. Unless otherwise specified, any alkoxy group may be substituted in one or more positions with a suitable substituent. Where more than one substituent group is present, these may be the same or different.

The term "alkylene" as used herein refers to a saturated, linear or branched divalent carbon chain. Examples of alkylene groups include, but are not limited to, methylene (-CH₂-), ethylene (-CH₂CH₂-), propylene (-CH₂CH₂CH₂-), etc. Unless otherwise specified, any alkylene group may be substituted in one or more positions with a suitable substituent. Where more than one substituent group is present, these may be the same or different.

The term "aryl" as used herein is intended to cover aromatic, carbocyclic ring systems. Such ring systems may be monocyclic or polycyclic (e.g. bicyclic) and contain at least one unsaturated aromatic ring. Where these contain polycyclic rings, these may be fused or bridged. Preferably such systems contain from 6-20 carbon atoms, preferably from 6 to 14 carbon atoms, e.g. either 6 or 10 carbon atoms. Examples of such groups include phenyl, 1-napthyl and 2-napthyl. A preferred aryl group is phenyl. Unless stated otherwise, any "aryl" group may be substituted by one or more substituents, which may be identical or different.

As used herein, the term "heteroaryl" is intended to cover heterocyclic aromatic groups. Such groups may be monocyclic or bicyclic and contain at least one unsaturated heteroaromatic ring system. Where these are monocyclic, these comprise 5- or 6-membered rings containing at least one heteroatom selected from nitrogen, oxygen and sulphur and contain sufficient conjugated bonds to form an aromatic system. Where these are bicyclic, these may be fused with a carbocyclic or heterocyclic ring and may contain from 9-11 ring atoms. Examples of heteroaryl groups include thiophene, thienyl, pyridyl, thiazolyl, furyl, pyrrolyl, triazolyl, imidazolyl, oxadiazolyl, oxazolyl, pyrazolyl, imidazolonyl, oxazolonyl, thiazolonyl, tetrazolyl, thiadiazolyl, benzimidazolyl, benzooxazolyl, benzofuryl, indolyl, isoindolyl, pyridonyl, pyridazinyl, pyrimidinyl, imidazopyridyl, oxazopyridyl, thiazolopyridyl, imidazopyridazinyl, oxazolopyridazinyl, thiazolopyridazinyl and purinyl. A preferred heteroaryl group is pyridyl. Unless stated otherwise, any "heteroaryl" may be substituted by one or more substituents, which may be identical or different.

The term "halogen" as used herein refers to a halogen atom, e.g. -F, -CI, -Br or -I.

Where any of the groups herein described are substituted, any substituents may be the same or different and may be selected from any of the following: C₁₋₃ alkyl (e.g. -CH₃), C₁₋₃ alkoxy (e.g. -OCH₃), and -NR⁶₂ (wherein each R⁶ is independently H or C₁₋₆ alkyl, preferably C₁₋₃ alkyl, e.g. -CH₃).

The surface-modified silica as herein described can be prepared using methods known in the art. The precise method used will depend on the nature of the selected coupling agent, for example the nature of the linking groups (where present) and the functional moiety selected for reaction with the diene rubber, but can readily be selected by those skilled in the art. Linkage of the coupling agent to the silica may, in some cases, require that it is appropriately functionalised, for example by incorporation of one or more reactive groups that enable its linkage to the silica, for example by the formation of a covalent bond or any other type of bond as herein described.

The dynamic imine bond as herein described will be formed by the reaction of a primary amine and a suitable aldehyde, for example an optionally substituted benzaldehyde. Typically, the primary amine will carry at least one functional group which enables its linkage to the surface of the silica filler, for example a silane. The primary amine for use in preparation of the modified silica will thus typically be an amino silane. The chemistry of such agents is well known and the skilled chemist can readily determine appropriate methods for their reaction with the silica. Generally, under the selected reaction conditions, at least one hydrolysable group present in the amino silane will be hydrolysed to form a reactive silanol which can form a siloxane linkage to the surface of the silica. The primary amine group of the amino silane can then be reacted with the selected aldehyde to form the desired dynamic imine bond.

Formation of the surface-modified silica may be carried out in stepwise fashion, for example in which the group containing the primary amine is initially bound (e.g. covalently linked) to the surface of the silica followed by reaction of the amine with an appropriate aldehyde (e.g. a benzaldehyde) which also carries a functional moiety capable of linkage to the diene rubber. Alternatively, the group containing the primary amine may initially be reacted with the aldehyde followed by linkage (e.g. covalent linkage) of the resulting moiety to the silica. In another embodiment, the surface-modified silica can be formed in a single 'one-step' reaction involving all reactants. Suitable solvents and conditions for the reaction, or for each step of the reaction, may readily be selected by those skilled in the art depending on the nature of the reactants.

A non-limiting example of a method for preparation of a surface-modified silica for use in the invention is shown in the scheme below:

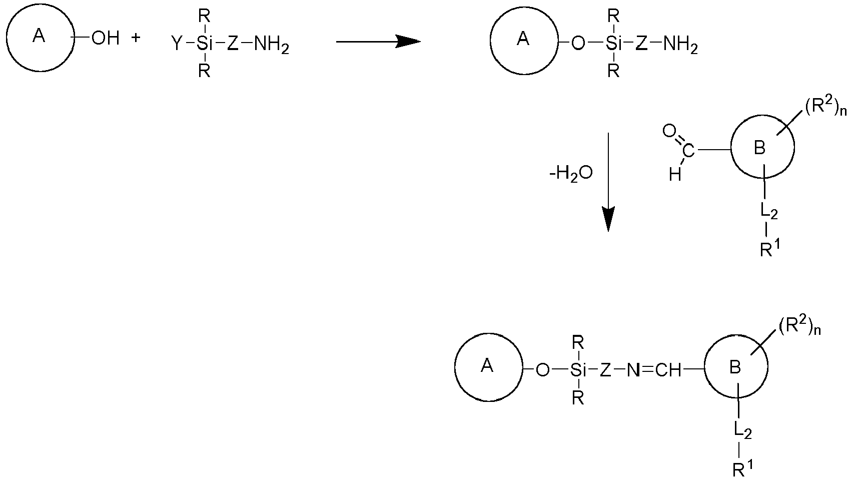

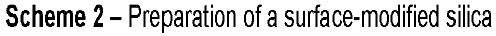

In Scheme 2:
A represents a silica particle;
Y is -OH or any hydrolysable group, for example C₁₋₆ alkoxy;
B, R, Z, L₂, R¹, R² and n are as herein defined.

In the case where ring B is a phenyl ring, a non-limiting example of a method for preparation of a surface-modified silica for use in the invention is shown in the scheme below:

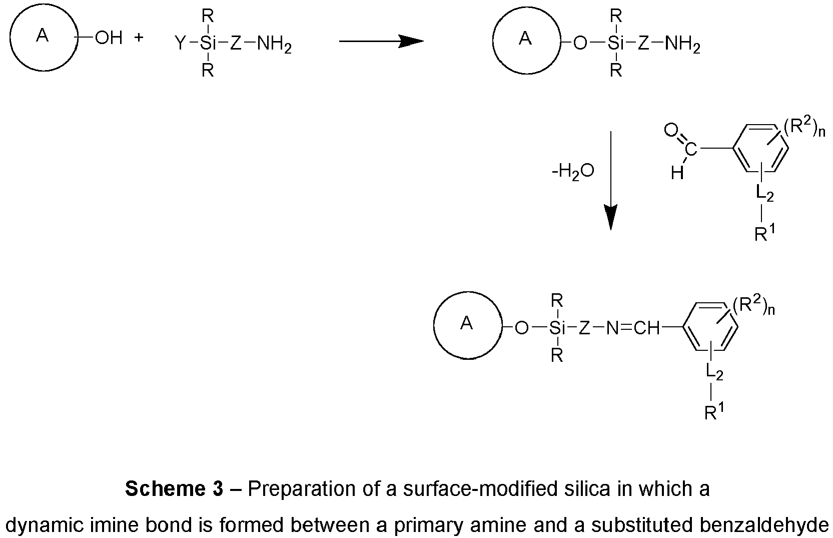

In Scheme 3:
A represents a silica particle;
Y is -OH or any hydrolysable group, for example C₁₋₆ alkoxy;
R, Z, L₂, R¹, R² and n are as herein defined.

Following the reaction to form the surface-modified silica, any ungrafted material may be removed using conventional methods, such as by washing with a suitable solvent, or by Soxhlet extraction in water. If necessary, any residual solvent can be removed, for example by drying at elevated temperature. Following preparation of the surface-modified silica, FTIR analysis can be used to determine the success of the reaction. If appropriate, the yield of modified silica can be determined by methods known in the art such as thermogravimetric analysis (TGA).

The methods described above relate to the preparation of a "pre-modified" silica for subsequent incorporation into the diene rubber matrix to produce the desired diene rubber-silica compound. An alternative to these methods is to prepare the surface-modified silica in-situ. In such methods, the components required to form the surface-modified silica are added to the rubber during compounding. In such embodiments, the coupling agent which includes the dynamic imine bond may be pre-synthesised before being added to the rubber matrix and the silica. Advantageously, however, all reactants required to form the desired coupling system in-situ are added to the mixture containing the diene rubber matrix and the silica. In this case, the dynamic imine bond is generally formed in-situ during rubber compounding. However, it may alternatively be formed during the process of vulcanisation.

The surface-modified silica herein described and methods for its preparation form further aspects of the invention.

In another aspect, the invention thus provides a silica filler which is surface-modified by attachment of a coupling agent capable of forming a linkage to a diene rubber, wherein said coupling agent incorporates a dynamic imine bond.

In another aspect the invention provides a process for producing a surface-modified silica filler as herein described, said process comprising the step of chemically modifying silica by attachment of a coupling agent capable of forming a linkage to a diene rubber, and wherein said coupling agent incorporates a dynamic imine bond.

The surface-modified silica which is herein described acts as a reinforcing filler in the diene rubber matrix. The term "diene rubber matrix" refers to an elastomeric matrix which comprises a diene rubber.

Any known diene rubber can be used in the invention and those skilled in the art can readily select a suitable rubber having in mind the intended use of the silica-diene rubber compound. Diene rubbers are well known in the art and include both natural and synthetic rubbers. Non-limiting examples of such rubbers include butadiene rubber (BR), natural rubber (NR), isoprene rubber (IR), epoxidized natural rubber (ENR), acrylonitrile-butadiene rubber (NBR), chloroprene rubber (CR), isobutylene-isoprene rubber (IIR), styrene-butadiene rubber (SBR), styrene-isoprene-butadiene rubber (SIBR) and ethylene-propylene-diene rubber (EPDM).

Diene rubbers can be modified with one or more functional groups and any such functionalised diene rubbers may be used in the invention. Where the diene rubber is functionalised, any of its polymer backbone, terminal groups and/or side chains may be bound to one or more functional groups. These functional groups may be incorporated into the polymer material during its production or, alternatively, they may be subsequently grafted onto the polymer. The type and position of any functional groups varies in different rubber grades known in the art. The choice of any functionalised rubber may depend on the intended use of the rubber compounds herein described. The use of a functionalised rubber may also aid in coupling of the diene rubber matrix to the silica filler if any of the functional groups are capable of reaction with the coupling agent herein described. Examples of functionalised diene rubbers include those which carry one or more reactive groups (e.g. alkoxysilyl groups) and/or one or more interacting groups (e.g. amino groups). Interacting groups such as amino groups may, for example, form hydrogen bonds within the rubber matrix. In one embodiment, the diene rubber for use in the invention is unfunctionalised.

Diene rubbers, for example styrene butadiene rubbers, having functional groups attached to the polymer backbone, to the end and/or start of the polymer chains, or to the side chains of the polymer, and which enable these to chemically attach to the silica filler via the coupling agent herein described may be employed in the invention. For example, these may have one or more functional groups which are capable of direct or indirect reaction with the functional moiety R¹ in any of the structures described herein. In some embodiments, the diene rubber for use in the invention is an end-group functionalised diene rubber, such as an end-group functionalised styrene butadiene rubber. End-group functionalised rubbers are well known in the art and any that are known for use in the manufacture of rubber compounds for tire treads may be used in the invention. In one embodiment, the diene rubber for use in the invention may be an end-group functionalised rubber that comprises terminal carboxyl groups. For example, it may comprise an end-group functionalised styrene butadiene rubber that comprises terminal carboxyl groups. Such terminal carboxyl groups may, for example, be provided by terminal silane-containing carboxyl groups such as those described in WO 2014/173706, the entire content of which is incorporated herein by reference. Diene rubbers having functional groups attached to the polymer backbone and/or to side chains of the polymer are also well known in the art for use as tire tread compounds and similarly find use in the invention.

In one set of embodiments, the diene rubber for use in the invention is one suitable for use in the production of a rubber compound which can be used as a tire component, such as a tire tread. The diene rubber to be used in the invention may, for example, be functionalised or unfunctionalised styrene butadiene rubber (SBR). Unfunctionalised SBR is particularly preferred.

Styrene-butadiene rubber is well known in the art. The term "styrene-butadiene rubber" or "SBR" as used herein is intended to refer generally to any synthetic rubber made by polymerisation of styrene and butadiene monomers. It thus refers to any styrene-butadiene copolymer. SBR is commonly used in the tire industry and can be made by well-known methods, such as by co-polymerisation of the corresponding monomers in emulsion, suspension or in solution. Styrene and butadiene monomers may be selected in suitable ratios according to the intended use and properties of the rubber compound. For example, styrene may be present in an amount of up to 80 wt.%, more typically up to about 45 wt.% for rubber tire tread compounds (wt.% based on the total weight of the comonomers). The diene component will generally be present in an amount of at least 50 wt.%. Tread compounds are required to have good viscoelastic properties due to their road contact when in use, as well as properties such as rolling resistance and traction on wet surfaces. Suitable amounts of styrene to achieve such properties are well known in the tire industry and may readily be selected by those skilled in the art.

The selected diene rubber can be used as 100 parts of the rubber in the compounds herein described, or it may be blended with any conventionally employed elastomer for rubber compounding or blends thereof, including both natural and synthetic rubbers. Blends of different diene rubbers may be used. Rubbers suitable for use in any blend are well known to those skilled in the art and include natural rubber, synthetic polyisoprene rubber, styrene-isoprene rubber, styrene-butadiene rubber, styrene-isoprene-butadiene rubber, butadiene-isoprene rubber, polybutadiene, butyl rubber, neoprene, acrylonitrile-butadiene rubber (NBR), silicone rubber, fluoroelastomers, ethylene acrylic rubber, ethylene-propylene rubber, ethylene-propylene terpolymer (EPDM), ethylene vinyl acetate copolymer, epichlorohydrin rubber, chlorinated polyethylene-propylene rubbers, chlorosulfonated polyethylene rubber, hydrogenated nitrile rubber, and tetrafluoroethylene-propylene rubber. The ratio of any polymer blends can be selected according to need, for example based on the viscoelastic properties of the rubber compound. Those skilled in the art can readily determine which elastomers may be appropriate and their relative amounts to provide a desired viscoelastic property range.

In a preferred embodiment, the selected diene rubber for use in the invention will be SBR. This may be used alone or as a blend with any of the other rubbers mentioned herein. Binary and ternary blends are preferred. In one set of embodiments, SBR may be used in combination with butadiene rubber and/or natural rubber. When used in combination with butadiene rubber the amount of SBR in the blend may range from 50 to 90% by weight (based on the total weight of the blend), preferably from 60 to 80% by weight, e.g. about 70% by weight. A binary blend of SBR : butadiene rubber in which the components are present in a 70:30 weight ratio is particularly preferred. Ternary blends including SBR, butadiene and natural rubber can also be used in the invention. In such blends, the SBR will generally form the major component and will be present in an amount ranging from 40 to 80% by weight (based on the total weight of the blend), preferably from 50 to 70% by weight, e.g. about 60% by weight. The butadiene and natural rubber components may each be present in an amount ranging from 10 to 30% by weight (based on the total weight of the blend), e.g. about 20% by weight. An SBR : butadiene : natural rubber blend in which the components are present in a 60:20:20 weight ratio may, for example, be used.

Commercially available sources of synthetic rubber such as SBR include Trinseo, Germany. A non-limiting example of a styrene butadiene rubber for use in the invention is Sprintan 4601 (Trinseo, Germany).

The silica can be blended with a diene rubber, and any other rubber materials as desired, to provide the rubber compounds according to the invention. The silica may be pre-modified to carry the coupling agent as herein described, i.e. it may be "pre-modified".

Methods for the preparation of the diene rubber-silica compounds herein described form a further aspect of the invention. In another aspect, the invention thus provides a process for producing a diene rubber-silica compound as herein described, said process comprising reversibly coupling a silica filler to a diene rubber matrix via a dynamic imine bond.

Diene rubber-silica compounds in which the silica filler herein described is dispersed in a rubber matrix can be made using methods known in the art in the manufacture of rubber compounds, such as compounding with other components including processing aids, curing systems, anti-degradants, pigments, additional fillers, compatibilizing agents for the fillers, fibres, resins, etc. Those skilled in the art can readily select a combination of vulcanizable rubber compounds for subsequent mixing and vulcanization according to the specific rubber product which is desired.

For example, in addition to the diene rubber matrix and the silica filler herein described, a vulcanizable composition may contain processing aids (e.g. oils), activators (e.g. zinc oxide, stearic acid, etc.), sulfur or sulfur-donating compounds, accelerators, anti-degradants (e.g. anti-oxidants, anti-ozonants, etc.), pigments, additional fillers, and compatibilizing agents. Zinc oxide and stearic acid function as activators in the vulcanisation process by shortening the vulcanisation time and impact the length and number of cross-links in the rubber matrix that forms during curing or vulcanisation. Depending on the intended use of the sulfur-vulcanized material, these additives can be selected and used in the conventional amounts.

The amount of silica to be mixed into the rubber compound can be selected based on the desired physical properties of the resulting compound and may depend on the presence or absence of any other fillers, for example. Suitable amounts can readily be determined by those skilled in the art but may, for example, range from about 20 to about 150 phr, preferably from about 50 to about 100 phr, e.g. from about 60 to about 90 phr (where "phr" is parts per hundred parts of the rubber).

Additional reinforcing fillers such as carbon black, carbon nanotubes, short carbon, polyamide, polyester, natural fibres, calcium carbonate, clay, alumina, aluminosilicates, etc. or any mixtures of these may also be present. However, typically the only filler present in the compositions will be the silica herein described.

Processing aids improve the processability of the compositions and include oils, such as mineral oils, vegetable oils, synthetic oils, or any mixtures thereof. These may be used in an amount of from about 5 to 75 phr, preferably from about 10 to 50 phr. Typical processing aids include oils, such as aromatic oils. Examples of such oils include Treated Distillate Aromatic Extract (TDAE), Residual Aromatic Extract (RAE), Mild Extract Solvate (MES), and bio-based oil seed derivatives.

Zinc oxide may be used in an amount of from about 1 to about 10 phr, preferably from about 2 to about 5 phr, more preferably from about 2 to about 3 phr. Stearic acid may be used in an amount of from about 1 to about 5 phr, preferably from about 2 to about 3 phr.

Sulfur may be used in an amount effective to achieve a satisfactory cure of the composition. It may, for example, range from about 1 to about 10 phr, preferably from about 1 to about 5 phr, e.g. from about 1 to about 3 phr.

Accelerators may be used in an amount of from about 1 to about 5 phr, preferably from about 1 to about 3 phr. Accelerators include thiazoles, dithiocarbamates, thiurams, guanidines, and sulphonamides. Examples of suitable accelerators include N-tertiary butyl benzothiazyle sulphonamide (TBBS), N-cyclohexyl-2-benzothiazole sulfenamide (CBS), diphenyl guanidine (DPG), 2-mercaptobenzothiazole (MBT) and tetrabenzilthiuram disulphide (TBZTD).

Compatibilizing agents may be used to reduce the formation of silica aggregates during compounding and may be present in an amount of from about 0 to about 5 phr, preferably from about 1 to about 3 phr. In one embodiment, no additional compatibilizing agents are present. Many compatibilizing agents are known for use in combining silica and rubber. The silica-based compatibilizing agents include silanes such as alkylalkoxy silanes, e.g. hexadecyltrimethoxy silane, octyltriethoxy silane and hexyltrimethoxy silane.

Other coupling agents which function to covalently link the silica to the SBR matrix may be present, though for reasons herein described it is generally preferred that these are absent. If present, these should be provided in low amounts. The appropriate amount of any coupling agent can be determined by those skilled in the art having in mind factors such as its molecular weight, the number of functional groups it contains and its reactivity. Most coupling agents may be used in an isomolar amount based on the amount of silica. When using bis(triethoxysilylpropyl) tetrasulfide as a coupling agent, this may be provided in an amount of from about 0.6 to about 4.8 phr per 80 phr silica, preferably from 1.2 to 3.2 phr per 80 phr silica. Examples of coupling agents include bifunctional silanes such as bis(3-triethoxysilylpropyl)tetrasulfide (TESPT), bis(3-triethoxysilylpropyl)disulfide (TESPD) and 3-octanoylthio-1-propyltriethoxysilane. In one embodiment, no additional coupling agents are present.

The rubber compounds may be prepared by methods known in the art and will involve mixing (i.e. compounding) of the rubber, the silica filler and any other components herein described to produce a rubber compound for subsequent vulcanization.

Mixing of the components will usually be carried out in stages in which the components may be added. Multi-step mixing processes are generally preferred to optimise dispersion of the silica filler and may involve the use of more than one mixer, for example different mixers arranged in series. For example, in the case of mixing a tire tread compound, the mixing process may involve an initial mixing stage in which a masterbatch is produced, followed by one or more additional non-productive mixing stages, and finally a productive mixing stage in which the curative agents (i.e. sulfur or sulfur-donating agents and accelerator(s)) are added. Mixers which may be used are well known in the art and include, for example, an open mill or a Banbury type mixer having tangential or intermeshing rotors.

Typically, the rubber, silica filler, processing aids, zinc oxide, stearic acid, anti-degradants (e.g. anti-oxidants, anti-ozonants), pigments, additional fillers, compatibilizing agents, and coupling agents (where present) are mixed to produce the initial masterbatch. This initial masterbatch may be followed by another masterbatch in which additional fillers and additives are added, or by a non-productive mixing stage in which no additional components are added. Any non-productive mixing stage may be used to further disperse the components (e.g. fillers) within the rubber, or to decrease the viscosity of the mixed rubber compound.

During mixing, the temperature is kept below a predetermined level to avoid premature cross-linking of the composition. Typically, the temperature may be kept below 150°C, preferably below 140°C. In producing the initial masterbatch, mixing may for example be carried out a temperature of from about 80 to about 110°C, e.g. about 100°C. In the non-productive mixing stage the temperature may be raised, for example up to about 150°C, e.g. about 130°C. Where in-situ surface-modification of the silica filler (e.g. via silanisation) is performed during the mixing procedure, the use of temperatures at the higher end of this range may be necessary for the reaction to occur. Similarly, if any additional compatibilizing agents are added during mixing, it may be necessary to carry out mixing at higher temperatures to ensure that these react with the silica surface. Mixing times may vary but can readily be determined by those skilled in the art based on the composition of the mixture and the type of mixer used. Generally, a mixing time of at least 1 minute, preferably between 2 and 30 minutes, should be sufficient to obtain the desired homogenous composition.

A final mixing stage involves the addition of curatives, including accelerator(s), anti-degradants. The temperature for this mixing stage will generally be lower, for example in the range of from about 40 to about 60°C, e.g. about 50°C. This final mix may also be followed by a further non-productive mixing stage in which no additional components are added.

The most appropriate type of mixing can readily be selected to achieve a vulcanizable rubber compound. Mixing speeds may readily be determined, but may for example range from a speed of from about 20 to about 100 rpm, e.g. from about 30 to about 80 rpm, preferably about 50 rpm.

In the case where the silica is surface-modified in-situ to introduce the coupling agent that incorporates the dynamic imine bond, modification of the silica filler will generally take place during one or more of the non-productive mixing stages of the process. The components required to form the coupling agent (e.g. an amino silane and a substituted benzaldehyde) may be introduced simultaneously during one of the non-productive mixing stages. These then react with one another and with the surface of the silica to form the desired surface-modified silica filler. Alternatively, the components that react to form the coupling agent may be added separately during the same or different stages of non-productive mixing. For example, the amino silane may be added together with the diene rubber, unmodified silica and processing oil in a first stage of non-productive mixing, followed by the addition of the substituted benzaldehyde, together with the zinc oxide and stearic acid, in a second stage of non-productive mixing. This sequential addition of the reactants can be advantageous to ensure that the amino silane initially reacts with the surface of the silica and to avoid, or at least minimise, adsorption of the benzaldehyde onto the silica surface,

Preparation of the diene rubber-silica compounds herein described in which the silica is surface modified in-situ represents a preferred embodiment of the invention, not only from the point of view of the convenience of the production method but also its potential impact on the dynamic properties of the resulting rubber compound. In some cases, at least one of the dynamic properties of the final rubber compound may be improved in comparison to the same rubber compound produced using pre-modified silica.

The vulcanizable rubber compound may be provided as an uncured (so-called "green") tire component for final vulcanisation that cures the composition. Curing to cross-link the rubber components and, where appropriate, to link the coupling agent to the diene rubber may be carried out by known methods. In the tire industry, for example, an uncured rubber (so-called "green body") is produced followed by curing in a press mold which concurrently cross-links the rubber components and molds the components into a final tire. Vulcanisation cures the rubber by cross-linking, principally via sulfur cross-links. Vulcanisation methods are well known. Appropriate vulcanisation conditions typically include heating to a temperature in the range from 120 to 200°C for a duration of from 5 to 180 mins.

Vulcanizable rubber compositions form a further aspect of the invention. In another aspect, the invention thus provides a vulcanizable rubber composition comprising a diene rubber matrix having dispersed therein a silica filler, wherein said silica filler is reversibly coupled to the diene rubber matrix via a dynamic imine bond.

Vulcanised rubber compounds obtained by, directly obtained by, or obtainable by cross-linking any vulcanizable rubber composition as herein described are also part of the invention.

Methods of producing a vulcanised rubber compound also form part of the invention. Such methods include those in which the silica is pre-modified to attach the coupling agent incorporating the dynamic imine bond, and those in which the silica is surface modified in-situ as herein described. Vulcanised rubber compounds prepared by any of the methods herein described are also part of the invention.

In another aspect, the invention thus provides a process for producing a vulcanized diene rubber-silica compound comprising a diene rubber matrix having dispersed therein a silica filler that is reversibly coupled to said diene rubber matrix via a dynamic imine bond, said process comprising the steps of:
(i) surface-modifying a silica filler by attachment of a coupling agent which incorporates a dynamic imine bond and which is capable of forming a linkage to a diene rubber matrix during compounding and/or vulcanisation;
(ii) compounding the resulting surface-modified silica filler with a diene rubber matrix whereby to produce a vulcanizable rubber composition; and
(iii) subjecting said vulcanizable rubber composition to vulcanization.

In yet another aspect, the invention provides a process for producing a vulcanized diene rubber-silica compound comprising a diene rubber matrix having dispersed therein a silica filler that is reversibly coupled to said diene rubber matrix via a dynamic imine bond, said process comprising the steps of:
(i) incorporating a silica filler into a diene rubber matrix, together with one or more compounds capable of reaction with said silica filler to provide a surface-modified silica filler having attached thereto a coupling agent which incorporates a dynamic imine bond and which is capable of forming a linkage to said diene rubber matrix during compounding and/or vulcanisation;
(ii) compounding the resulting composition whereby to produce a vulcanizable rubber composition comprising said surface-modified silica filler; and
(iii) subjecting said vulcanizable rubber composition to vulcanization.

Where the silica is surface modified in-situ, the compounds capable of reaction with the silica filler to provide the desired surface-modified silica filler can readily be selected by those skilled in the art having in mind the nature of the desired coupling agent that incorporates the dynamic imine bond. In one embodiment, the surface-modified silica may be produced in-situ by reaction of the silica filler with compounds of the general formula (VI) and (VII): 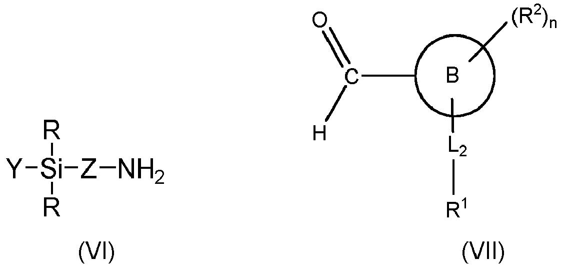 wherein:
Y is -OH or any hydrolysable group, for example C₁₋₆ alkoxy;
each R is independently selected from -OH, C₁₋₆ alkoxy (preferably C₁₋₃ alkoxy) and C₁₋₆ alkyl (preferably C₁₋₃ alkyl);
Z is an optionally substituted C₁₋₁₂ alkylene group which may be interrupted by one or
more groups selected from -O-, -SiR'₂- (in which each R' is independently -OH, C₁₋₆ alkoxy or C₁₋₆ alkyl), -PR"-, -NR"- and -OP(O)(OR")O- (in which R" is H or C₁₋₆ alkyl, preferably C₁₋₃ alkyl, e.g. methyl);
ring B is an aromatic or heteroaromatic group;
L₂ is either a direct bond or an organic linking group;
R¹ is a functional group capable of forming a bond with a diene rubber;
each R² is independently selected from:
   - C₁₋₆ alkyl (preferably C₁₋₃ alkyl, e.g. -CH₃);
   - C₁₋₆ alkoxy (preferably C₁₋₃ alkoxy, e.g. -OCH₃);
   - halogen (e.g. F, CI, Br or I); and
   - a group of formula -L₂-R¹; and
n is an integer from 0 to 4, preferably 0 to 2, e.g. 0 or 1.

The compounds of formula (VI) and (VII) may be contacted with the silica filler simultaneously to form the surface-modified silica in-situ. Advantageously, however, these may be contacted sequentially with the silica filler, e.g. in separate non-productive mixing stages of the rubber compounding process. The compound of formula (VI) may, for example, be contacted with the silica filler initially, followed by contact with the compound of formula (VII). In this way, adsorption of the compound of formula (VII) on the silica surface is minimised.

In another aspect, the invention provides a vulcanized diene rubber-silica compound obtained by, directly obtained by, or obtainable by any process as herein described. Such compounds obtained by a process in which the surface-modified silica filler is produced in-situ form a preferred aspect of the invention.

The rubber compounds herein described find particular use in the manufacture of vehicle tires, in particular in the manufacture of tire components such as tire treads. Tire treads may be used for tires for any vehicle, but they find particular use in the manufacture of tire treads for motor cars. Other uses for the rubber compounds include as vibration dampers, sidewall rubbers, inner liner rubbers, bead filler rubbers, body ply rubbers, skim shock rubbers and tread rubbers.

In another aspect, the invention thus provides the use of a diene rubber-silica compound as herein described as a component of a vehicle tire or in the manufacture of a component of a vehicle tire.

In another aspect the invention provides a vehicle tire component, such as a tire tread, made from a diene rubber-silica compound as herein described. A vehicle tire comprising the vehicle tire component also forms part of the invention.

The assembly of the components of a tire and production methods are well known in the art. Assembly of the "green" tire is followed by compression molding in a suitable mold in which vulcanisation produces the final tire.

The rubber compounds according to the invention may also be used for non-tire applications, such as in the manufacture of hoses and seals.

In the present invention, the replacement of conventional fillers with the chemically modified silica filler results in a rubber compound having excellent physical properties, as well as acceptable wet traction and rolling resistance for use as tire tread rubber compounds. In the tire industry, various tests of the rubber compound are used as predictors of cured tire properties. These include the following:
The Payne effect:
   This provides an indication of the extent of the filler network and may be measured using a Rubber Process Analyzer.
Mechanical properties, such as tensile strength, elongation at break and reinforcement index:
   ASTM D412 standard using universal testing machine Zwick Z05 (Zwick, Germany) operated with crosshead speed of 500 mm/min.
   Percent rebound at 60°C is a predictor of rolling resistance of the tread compound. An increased percent rebound at 60°C, when compared to a control compound, is indicative of lower rolling resistance. Rebound may be measured using a Zwick 5109 (Zwick, Germany) according to ISO 8307.
   Hardness, Shore A may be measured using a universal hardness tester (Zwick, Germany) according to DIN 53505.
Dynamic mechanical properties:
   These may be measured using a Gabo-Netzsch Eplexor at a frequency of 10 Hz, with a dynamic strain of 1% below 0°C and 3% at room temperature. The loss factor (tangent δ, or tan δ) at 0°C is an indicator of wet traction. An increase in tan δ at 0°C, when compared to a control compound, correlates with an improvement in wet traction of the tread compound. tan δ at 60°C is an indicator of rolling resistance. A lower result, when compared to a control compound, is indicative of decreased rolling resistance.

The diene rubber-silica compounds herein described may be recycled using methods known in the art. Recycling involves devulcanisation of the rubber. During recycling the rubber compounds will usually be cut and shredded into finely divided form. The presence of the dynamic imine bond between the silica filler and diene rubber chains permits the rubber compound to be further treated whereby to break the dynamic imine bond without the need for any harsh treatment conditions. For example, methods such as mild chemical, thermophysical or biological treatment may be used. Following the removal of impurities, the rubber may be combined with one or more additional polymer components and converted into a new polymer material.

In a further aspect, the invention thus provides a method of recycling a diene rubber-silica compound as herein described, said method comprising the step of de-vulcanising said compound; and optionally recovering the diene rubber.

The method of recycling may involve the step of shearing the compound whereby to form a finely divided rubber composition which can then be subjected to devulcanisation. Shearing of the diene rubber-silica compound may be achieved using any known method, such as grinding. Once ground into finely divided form, de-vulcanisation can be carried out in order to reclaim the rubber. Methods for de-vulcanisation include physical processes (e.g. mechanical, thermo-mechanical, microwave and ultrasonic) or chemical processes (e.g. the use of radical scavengers, nucleophilic additives, catalyst systems or chemical probes). Thermal de-vulcanisation may be carried out at a temperature of from 180 to 300°C. Thermo-chemical devulcanisation can be achieved by using a de-vulcanisation aid (e.g. a disulphide such as diphenylsulfide, dibutylsulfide or di(2-aminophenyl)disulfide) and the use of temperatures of from 180 to 300°C.

Once recovered, the diene rubber can be blended with original virgin diene rubber and/or other additional polymer components and used to produce a new polymer material.

The invention is illustrated further by way of the following non-limiting Examples and the accompanying figures, in which:
Figure 1 - Schematic showing the procedure employed in the creep testing.
Figure 2 - Uncured Payne effect of the SSBR/silica compounds.
Figure 3 - Cured Payne effect of the SSBR/silica compounds.
Figure 4 - Stress-strain curves of the SSBR/silica compounds at room temperature.
Figure 5 - Reinforcement index of the SSBR/silica compounds.
Figure 6 - Variation of the loss factor (tan δ) as a function of temperature of the SSBR/silica compounds.
Figure 7 - Stress-strain curves of the SSBR/silica compounds at 100°C.
Figure 8 - Variation of the strain during creep testing of the SSBR/silica compounds.

### Examples

### Testing Procedures:

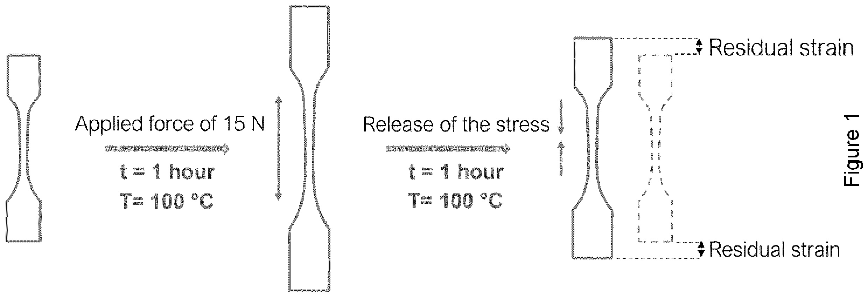

1. Payne Effect
   Payne effect was measured using a Rubber Process Analyzer, RPA elite (TA instruments) with strain sweeps from 0.1% to 100% for cured samples and for uncured samples, at a frequency of 1.6 Hz and a temperature of 60°C. The cured samples were vulcanized beforehand inside the equipment chamber according to the vulcanization conditions at 160°C.
2. Modulus, Tensile Strength and Elongation at Break
   Modulus, tensile strength (Stress at Maximum Strain) and elongation at break were measured using a universal testing machine Zwick Z05 (Zwick, Germany) operated with a crosshead speed of 500 mm/min according to ASTM D412. Modulus (100% (M100)) and 300% (M300)), tensile strength (Ts) and elongation at break (Eb) were calculated according to the calculations in ASTM D412. The reinforcement index was determined as the ratio of M300 to M100.
3. Rebound
   Rebound, the resilience of a rubber sample based on the ratio of returned to delivered energy, was measured according to ISO 8307 using a testing machine Zwick 5109 (Zwick, Germany). Percentage rebound was calculated according to ISO 8307.
4. Hardness, Shore A
   Shore A hardness was measured according to DIN 53505 using a universal hardness tester (Zwick, Germany).
5. Loss and Storage Modulus, and Loss Factor (tan δ)
   Dynamic mechanical measurement of the vulcanized samples was carried out using a Gabo-Netzsch Eplexor. Measurements were performed with a frequency of 10 Hz, a dynamic strain of 1% below 0°C and 3% at room temperature (RT). The change in the strain at RT was investigated due to softening of the rubber at higher temperatures which can generate noise in the measurements.
6. Mechanical Properties at high temperature
   Mechanical properties of the compounds at 100°C were measured by a universal testing machine Zwick Z010 (Zwick, Germany) operated with a crosshead speed of 500 mm/min and with a limit strain of 330%. The tests were performed in a temperature chamber at 100°C. Measurements of the dynamic properties of the vulcanized compounds before and after cycling the samples in the tensile machine were carried out on a Gabo-Netzsch Eplexor. Measurements were performed with a frequency of 10 Hz, a dynamic strain of 1% below 0°C and 3% at room temperature (RT). The change in the strain at RT was investigated due to softening of the rubber at higher temperatures which can generate noise in the measurements. The cycling of the samples was performed in a universal testing machine Zwick Z010 (Zwick, Germany) operated with a crosshead speed of 500 mm/min and with a limit strain of 200%. All samples were cycled 5 times at 100°C.
7. Creep Deformation
   Creep experiments were carried out using a universal testing machine Zwick Z010 (Zwick, Germany). A force of 15 N was applied to the samples, this force was maintained for 1 hour. After this time the stress was released and the changes in the strain of the samples were measured for another hour. The temperature of the experiments was 100°C. Figure 1 illustrates the procedure for the creep experiments.

### Preparation of rubber compounds according to the invention:

Rubber compounds for tire tread applications were prepared using a non-functionalised solution styrene butadiene rubber (SSBR) as the polymer matrix and silica as the filler. Modification of the silica was performed by reaction of the silica with an amino silane and a benzaldehyde compound in order to obtain a dynamic imine bond. This reaction was either performed during the mixing of the rubber compounds (i.e. in-situ) or prior to mixing with the rubber compounds (i.e. the silica was "pre-modified").

### Materials:

Rubber: Non-functionalised SSBR: Sprintan 4601 (Trinseo, Germany)
Silica: ULTRASIL^{®} 7000 GR (Evonik Resource Efficiency GmbH, Germany)
3-Aminopropyltriethoxysilane (Sigma Aldrich, the Netherlands)
3-Vinylbenzaldehyde (Sigma Aldrich, the Netherlands)
4-Allyloxybenzaldehyde (Sigma Aldrich, the Netherlands)
4-(Methylthio)benzaldehyde (Sigma Aldrich, the Netherlands)
TDAE (Hansen & Rosenthal, Germany)
Zinc oxide (Millipore Sigma, Germany)
Stearic Acid (Millipore Sigma, Germany)
Sulfur (Caldic B.V., the Netherlands)
N-Tertiary butyl benzothiazyl sulphonamide (TBBS) (Caldic B.V., the Netherlands) Bis(3-triethoxysilylpropyl)disulfide (TESPD): Si266^{®} (Evonik Resource Efficiency GmbH, Germany)
Hexadecyltrimethoxysilane (Sigma Aldrich, the Netherlands).

### Silica Modification:

In-situ modification of the silica was performed by reaction with an amino silane (3-aminopropyltriethoxysilane) and each of the following benzaldehydes during mixing of the rubber compounds: 3-vinylbenzaldehyde, 4-allyloxybenzaldehyde, and 4-(methylthio)benzaldehyde).

Pre-modification of the silica was performed by reaction of silica with the amino silane (3-aminopropyltriethoxysilane) and the selected benzaldehyde in a two-step reaction as follows:

### Step 1: Reaction between the silica and amino silane

The amount of silica used was 100 g and for the amino silane 8 g. The reaction was performed during 24 hours at 70°C using toluene as the solvent. The product was filtered after the first step of the reaction.

### Step 2: Reaction with the benzaldehyde

Reaction between the pre-modified silica and the selected benzaldehyde was carried out for 24 hours at 40°C using toluene as the solvent. The obtained product was extracted in toluene during 24 hours using Soxhlet units. The quantities employed for the different benzaldehydes were: 4.8 g of 3-vinylbenzaldehyde, 5.9 g of 4-allyloxybenzaldehyde and 5 g of 4-(methylthio)benzaldehyde.

### Preparation of rubber compounds according to the invention:

Rubber compounds (SSBR/modified silica) in accordance with the invention were prepared in an internal mixer (Brabender Plasticorder 350S, Duisburg, Germany) with a fill factor of 0.7, initial temperature of 100°C and rotor speed of 50 rpm. Samples were prepared according to the formulation in Table 1 and in accordance with the mixing procedure in Table 2.

**Table 1 - Formulation of rubber compounds in accordance with the invention**

| **Ingredients** | **Quantity (phr = per hundred parts rubber)** | |
|---|---|---|
| | **Examples 1-3 (E1-E3)** | **Examples 4-6 (E4-E6)** |
| SSBR - Sprintan 4601 | 100 | 100 |
| Pre-modified silica - ULTRASIL^{®} 7000 GR + modifier | 80 + amount of modifier calculated by TGA | - |
| Un-modified silica - ULTRASIL^{®} 7000 GR | - | 80 |
| TDAE | 37.5 | 37.5 |
| ZnO | 2.5 | 2.5 |
| Stearic Acid | 2.5 | 2.5 |
| Sulfur | 1.4 | 1.4 |
| TBBS | 2 | 2 |
| 3-aminopropyltriethoxysilane | - | * |
| Benzaldehyde (3-vinylbenzaldehyde, 4-allyloxybenzaldehyde or 4-(methylthio)benzaldehyde) | - | * |

| | | |
|---|---|---|
| * The amount of silane and benzaldehyde was adjusted equimolarly for each compound based on the amount of TESPD added in Reference Compound 1 (6.2 phr TESPD) - see Table 5 below | | |

**Table 2 - Mixing procedure of the rubber compounds**

| **Time** | **Action - in-situ modified silica (E4-E6)** | **Action - "pre-modified" silica (E1-E3)** |
|---|---|---|
| **[min:s]** | **Step 1 pre-heating 100** °C - **50rpm** | |
| 0.00 | Add rubber, mastication | |
| 1.20 | Add 1/3 filler, 1/2 silane | Add 1/3 "pre-modified" filler, |
| 2.40 | Add 1/3 filler, 1/2 silane, TDAE | Add 1/3 "pre-modified" filler, TDAE |
| 4.00 | Add 1/3 filler, | Add 1/3 "pre-modified" filler, |
| 5.00 | Increase torque (increase temperature to 130°C) | |
| 10.00 | Stop mixing (reaching 140°C) | |

| | **Step 2 pre-heating 100°C** - **50 rpm** | |
|---|---|---|
| 0.00 | Add elastomer pre-mix, mastication | |
| 1.00 | Addition of benzaldehyde (E4-E6 only), ZnO and Stearic Acid | |
| 1.20 | Increase temperature | |
| 5.00 | Stop mixing (reaching 140°C) | |

| | **Step 3 pre-heating 50°C** - **50 rpm** | |
|---|---|---|
| 0.00 | Add elastomer pre-mix, mastication | |
| 1.30 | Add all curatives (sulphur, TBBS) | |
| 3.00 | Stop mixing | |

Details of the final rubber compounds according to the invention are set out in Table 3 below.

**Table 3 - SSBR/modified silica rubber compounds**

| | |
|---|---|
| Example 1 (E1) | SSBR/silica compound prepared using silica pre-modified by reaction with 3 aminopropyltriethoxysilane and 3-vinylbenzaldehyde |
| Example 2 (E2) | SSBR/silica compound prepared using silica pre-modified by reaction with 3 aminopropyltriethoxysilane and 4-Allyloxybenzaldehyde |
| Example 3 (E3) | SSBR/silica compound prepared using silica pre-modified by reaction with 3 aminopropyltriethoxysilane and 4-(methylthio)benzaldehyde |
| Example 4 (E4) | SSBR/silica compound prepared using silica in-situ modified by reaction with 3 aminopropyltriethoxysilane and 3-vinylbenzaldehyde |
| Example 5 (E5) | SSBR/silica compound prepared using silica in-situ modified by reaction with 3 aminopropyltriethoxysilane and 4-allyloxybenzaldehyde |
| Example 6 (E6) | SSBR/silica compound prepared using silica in-situ modified by reaction with 3 aminopropyltriethoxysilane and 4-(methylthio)benzaldehyde |

### Preparation of Reference rubber compounds:

Two reference rubber compounds were prepared, details of which are shown in Table 4.

**Table 4 - Reference SSBR/silica compounds**

| | |
|---|---|
| Reference 1 | SSBR/silica compound in-situ silanized with TESPD |
| Reference 2 | SSBR/silica compound in-situ silanized with hexadecyltrimethoxysilane |

In Reference 1 the bifunctional silane coupling agent TESPD was employed to link the silica and SSBR. In Reference 2, a monofunctional silane (hexadecyltrimethoxysilane) was employed for in-situ modification of the silica. The reference compounds were prepared according to the formulation shown in Table 5 and in accordance with the mixing procedure used for the compounds according to the invention shown in Table 2 (in which the silane is "TESPD" or hexadecyltrimethoxysilane, as appropriate).

**Table 5 - Formulation of reference compounds**

| | **Quantity (phr)** | |
|---|---|---|
| **Ingredients** | **Reference 1** | **Reference 2** |
| SSBR - Sprintan 4601 | 100 | 100 |
| Silica - ULTRASIL^{®} 7000 GR | 80 | 80 |
| Si266^{®}* | 6.2 | - |
| Hexadecyltrimethoxysilane | - | 9.1** |
| TDAE | 37.5 | 37.5 |
| ZnO | 2.5 | 2.5 |
| Stearic Acid | 2.5 | 2.5 |
| Sulfur | 1.4 | 1.4 |
| TBBS | 2 | 2 |

| | | |
|---|---|---|
| * Bis(3-triethoxysilylpropyl)disulfide (TESPD) ** The amount of hexadecyltrimethoxysilane was adjusted equimolarly taking as reference the amount of TESPD added in Reference 1 | | |

### Testing of rubber compounds:

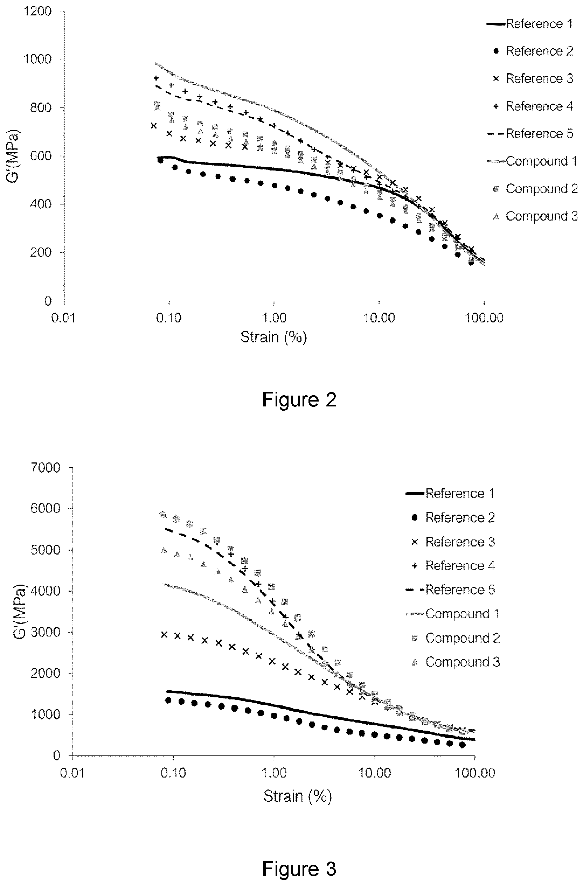

All rubber compounds were subjected to various tests as outlined in the test procedures. Results for the measured Payne effect are shown in Table 6 and accompanying Figures 2 and 3.

**Table 6 - Payne effect of the SSBR/silica compounds**

| **Compound** | **Cured** - **Payne effect** | | **Uncured** - **Payne effect** | |
|---|---|---|---|---|
| | **ΔG'**, **kPa** | **G'_{100%}, kPa** | **ΔG'**, **kPa** | **G'_{100%}, kPa** |
| Reference 1 (R1) | 1151.0 | 403.6 | 438.6 | 153.9 |
| Reference 2 (R2) | 1101.7 | 233.6 | 453.0 | 127.3 |
| Example 1 (E1) | 2345.2 | 597.0 | 551.7 | 173.3 |
| Example 2 (E2) | 5304.7 | 571.1 | 758.1 | 164.0 |
| Example 3 (E3) | 4916.4 | 606.9 | 723.9 | 167.0 |
| Example 4 (E4) | 3584.1 | 571.1 | 834.0 | 149.1 |
| Example 5 (E5) | 5310.0. | 533.2 | 669.0 | 146.5 |
| Example 6 (E6) | 4447.4 | 559.6 | 660.4 | 140.8 |

The results for the uncured and cured Payne Effect show that the rubber compounds according to the invention present a higher Payne Effect than the reference compounds indicating a strong filler network. The higher values of G' at 100% strain obtained for the cured Payne effect for the rubber compounds of the invention compared to the reference compounds indicates a higher filler-rubber interaction in these compounds. The Payne effect of the compounds of the invention is similar regardless of whether the silica was "pre-modified" (E1-E3) or modified in-situ (E4-E6).

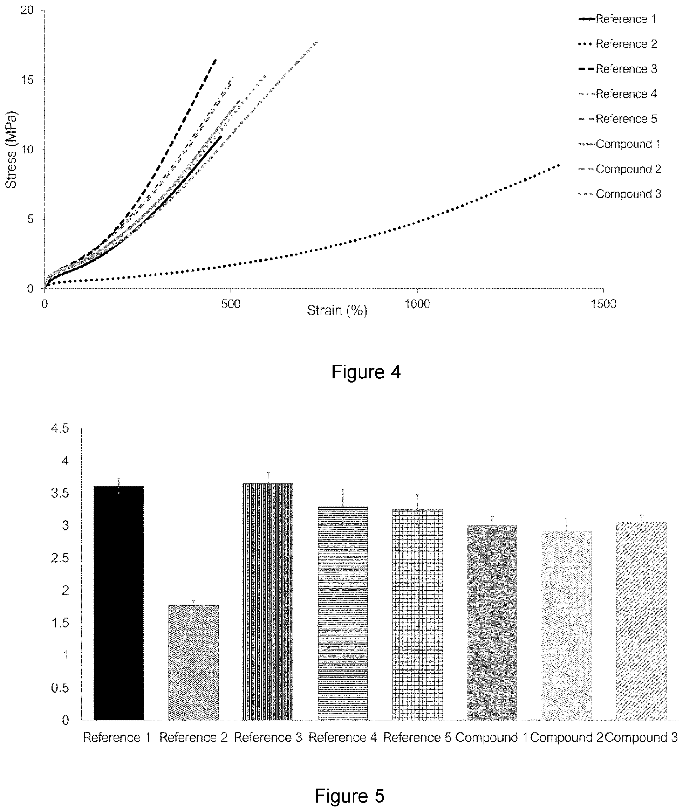

Results for the mechanical properties of the vulcanised compounds are shown in Table 7 and accompanying Figures 4 and 5.

**Table 7 - Mechanical properties of the SSBR/silica compounds**

| **Compound** | **Ts (MPa)** | **Eb (%)** | **Reinforcement index (M300/M100)** |
|---|---|---|---|
| Reference 1 (R1) | 10.7 | 465 | 3.6 |
| Reference 2 (R2) | 8.6 | 1296 | 1.8 |
| Example 1 (E1) | 15.6 | 458 | 3.6 |
| Example 2 (E2) | 15.7 | 527 | 3.3 |
| Example 3 (E3) | 16.6 | 535 | 3.2 |
| Example 4 (E4) | 12.5 | 500 | 3.0 |
| Example 5 (E5) | 17.0 | 700 | 2.9 |
| Example 6 (E6) | 14.6 | 570 | 3.1 |

The results of the mechanical properties show that all compounds of the invention have a reinforcing index comparable to that of Reference Compound 1. All compounds according to the invention show higher elongation at break and also higher tensile strength than Reference Compounds 1 and 2.

The rebound properties of the compounds and hardness are shown in Table 8. Rebound results show that all compounds of the invention have comparable values to Reference Compound 1. Their dynamic properties are therefore comparable to that of a rubber compound produced using the state-of-the art bifunctional silane coupling agent, TESPD. The rebound level is low for Reference Compound 2 since this contains the covering agent which is not reactive with the rubber and does not couple the silica to the rubber matrix. The higher rebound results for the compounds of the invention are evidence of a high coupling efficiency. With respect to hardness, all compounds according to the invention show higher values than Reference Compounds 1 and 2.

**Table 8 - Rebound and hardness of the SSBR/silica compounds**

| **Compound** | **Rebound at 60°C (%)** | **Hardness, Shore A** |
|---|---|---|
| Reference 1 (R1) | 56.9 | 52.6 |
| Reference 2 (R2) | 44.1 | 41.2 |
| Example 1 (E1) | 56.9 | 56.6 |
| Example 2 (E2) | 53.1 | 64.8 |
| Example 3 (E3) | 53.7 | 65.3 |
| Example 4 (E4) | 52.3 | 64.9 |
| Example 5 (E5) | 51.2 | 65.8 |
| Example 6 (E6) | 51.6 | 66.3 |

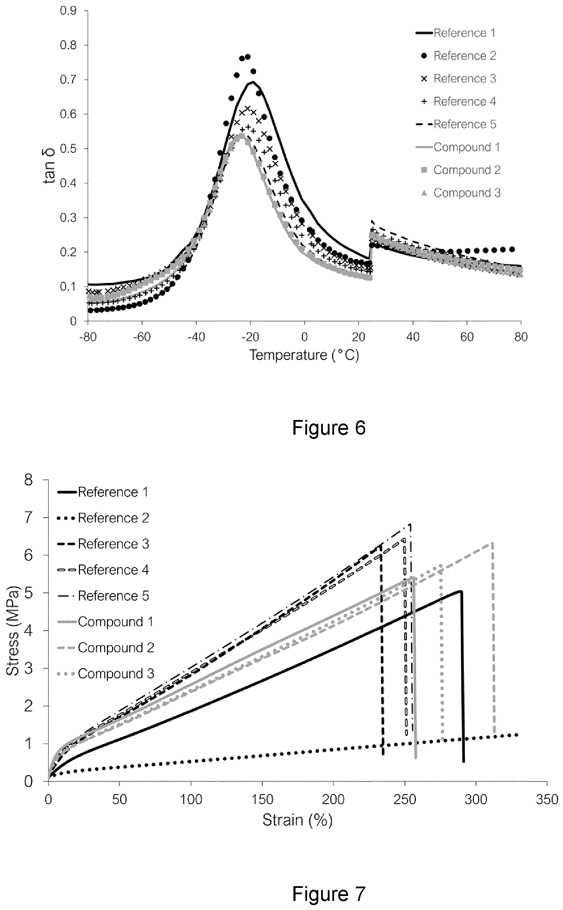

Results of the dynamic mechanical measurement of the vulcanized samples are set out in Table 9 and accompanying Figure 6.

**Table 9 - Maximum tan δ and tan δ at 60°C and 0°C of the SSBR/silica compounds**

| **Compound** | ***tan δ* at 60°C** | ***tan δ* at 0°C** | ***tan* δ maximum** |
|---|---|---|---|
| Reference 1 (R1) | 0.169 | 0.352 | 0.693 |
| Reference 2 (R2) | 0.203 | 0.292 | 0.766 |
| Example 1 (E1) | 0.158 | 0.283 | 0.616 |
| Example 2 (E2) | 0.181 | 0.248 | 0.563 |
| Example 3 (E3) | 0.185 | 0.221 | 0.543 |
| Example 4 (E4) | 0.160 | 0.199 | 0.538 |
| Example 5 (E5) | 0.170 | 0.209 | 0.535 |
| Example 6 (E6) | 0.161 | 0.211 | 0.537 |

Analysis of the loss factor (tan δ) as a function of the temperature of the compounds of the invention shows E4 and E6 have lower values of tan δ at 60°C (indicating better rolling resistance) compared to Reference Compounds 1 and 2, and E5 has a similar value of tan δ at 60°C to Reference 1. All compounds according to the invention present lower values of tan δ at 0°C and maximum of tan δ than Reference Compounds 1 and 2.

The re-connectivity of the new bonds created with the silica modification according to the invention was analysed by studying the mechanical response of the compounds at high temperatures, and analysing the change in dynamic properties after submitting the compounds to a cycling (fatigue test).

The results of the mechanical properties measured at 100°C are shown in Figure 7. These show that all compounds according to the invention how similar resistance to high temperatures. All compounds except for Reference Compound 2 were broken before reaching the limit strain established for the experiment (330% strain). However, all compounds according to the invention reached higher tensile strengths than Reference Compound 1, and E5 also showed a higher elongation at break.

Results of the dynamic mechanical measurement of the vulcanised compounds before and after cycling in the tensile machine are set out in Table 10.

**Table 10 - Maximum tan δ and tan δ at 60°C and 0°C of the SSBR/silica compounds**

| **Compound** | ***tan δ* at 60°C** | ***tan δ* at 60°C after cycling 5 times at 100°C** | ***tan δ* at 0°C** | ***tan δ* at 0°C after cycling 5 times at 100°C** | ***tan δ* maximum** | ***tan δ* maximum after cycling 5 times at 100°C** |
|---|---|---|---|---|---|---|
| Reference 1 (R1) | 0.169 | 0.203 | 0.352 | 0.244 | 0.693 | 0.564 |
| Example 4 (E4) | 0.160 | 0.200 | 0.199 | 0.251 | 0.538 | 0.596 |
| Example 6 (E6) | 0.161 | 0.194 | 0.211 | 0.268 | 0.537 | 0.600 |

Compounds E4 and E6 according to the invention present a better performance in dynamic properties after being submitted to 5 cycles at 100°C until 200% strain than Reference Compound 1. Both compounds E4 and E6 show after cycling: lower values of tan δ at 60°C (indicating better rolling resistance), and higher values of tan δ at 0°C and higher maximum of tan δ (indicating better wet grip) than Reference Compound 1.

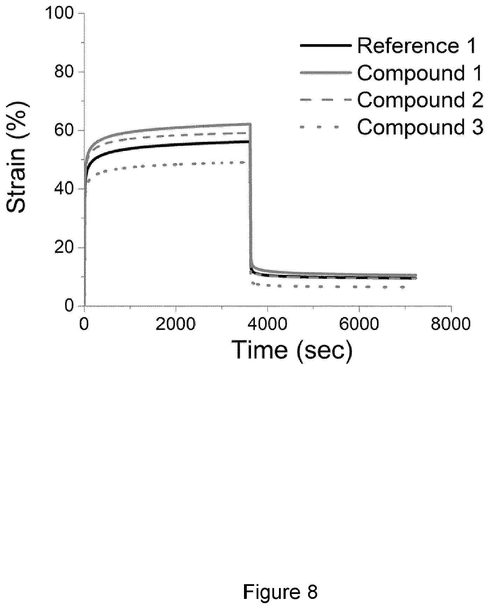

The re-connectivity of the new bonds created with the silica modification according to the invention was further analysed by conducting a creep experiment. The results are shown in Figure 8. The results show that E4 and E5 reached a higher elongation with the applied force and the recovery of the original shape is almost the same as that of Reference compound 1. With respect to E6, the elongation is significantly lower, but also the residual strain is lower compared to the other compounds.

The invention has been described with reference to exemplary embodiments. Modifications and alterations are considered to form part of the invention to the extent that they are within the scope of the disclosure and appended claims. The scope of the disclosure should be determined with reference to the claims and is considered to include equivalents.

## Claims

1. A diene rubber-silica compound comprising a diene rubber matrix having dispersed therein a silica filler, wherein said silica filler is reversibly coupled to the diene rubber matrix via a dynamic imine bond.

2. A diene rubber-silica compound as claimed in claim 1, wherein the diene rubber matrix comprises styrene butadiene rubber, optionally wherein the diene rubber matrix comprises a blend of styrene butadiene rubber and at least one other diene rubber such as butadiene rubber.

3. A diene rubber-silica compound as claimed in claim 1 or claim 2, wherein said silica filler is surface-modified by a coupling agent incorporating the dynamic imine bond and which is bound to the diene rubber matrix, the coupling agent having a structure of formula (I): 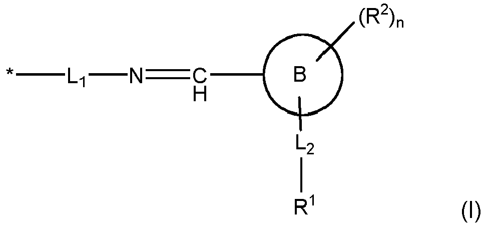 wherein:
* denotes the point of attachment of the coupling agent to the silica surface;
ring B is an aromatic or heteroaromatic group;
L₁ is an organic linking group;
L₂ is either a direct bond or an organic linking group;
R¹ is a functional moiety capable of forming a bond with the diene rubber matrix; each R² is independently selected from:
- C₁₋₆ alkyl (preferably C₁₋₃ alkyl, e.g. -CH₃)
- C₁₋₆ alkoxy (preferably C₁₋₃ alkoxy, e.g. -OCH₃)
- halogen (e.g. F, CI, Br or I); and
- a group of formula -L₂-R¹; and
n is an integer from 0 to 4, preferably 0 to 2, e.g. 0 or 1.

4. A diene rubber-silica compound as claimed in claim 3, wherein said coupling agent has a structure of formula (II): 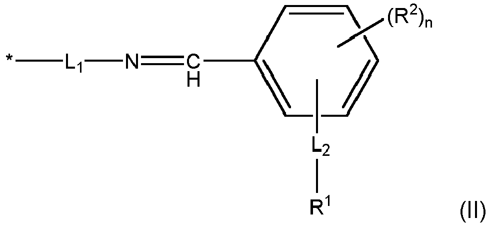 wherein *, L₁, L₂, R¹, R² and n are as defined in claim 3.

5. A diene rubber-silica compound as claimed in claim 3, wherein said coupling agent has a structure of formula (IV): 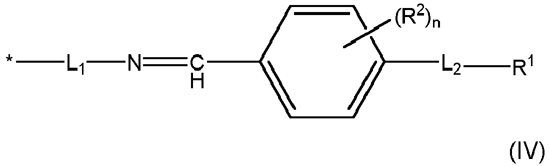 wherein *, L₁, L₂, R¹, R² and n are as defined in claim 3.

6. A diene rubber-silica compound as claimed in any one of claims 3 to 5, wherein L₁ is a group of formula (III): 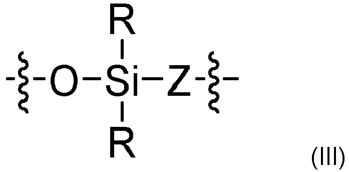 in which
each R is independently selected from -OH, C₁₋₆ alkoxy (preferably C₁₋₃ alkoxy) and C₁₋₆ alkyl (preferably C₁₋₃ alkyl); and
Z is an optionally substituted C₁₋₁₂ alkylene group which may be interrupted by one or more groups selected from -O-, -SiR'₂- (in which each R' is independently
-OH, C₁₋₆ alkoxy or C₁₋₆ alkyl), -PR"-, -NR"- and -OP(O)(OR")O- (in which R" is H or C₁₋₆ alkyl, preferably C₁₋₃ alkyl, e.g. methyl).

7. A diene rubber-silica compound as claimed in any one of claims 3 to 6, wherein said coupling agent has a structure of formula (V): 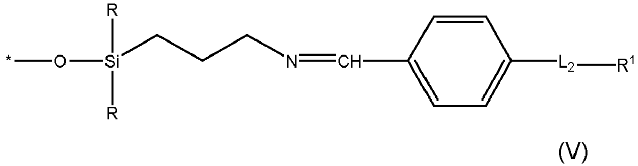 wherein *, L₂ and R¹ are as defined in claim 3; and
each R is as defined in claim 6.

8. A diene rubber-silica compound as claimed in any one of claims 3 to 7, wherein L₂ is a direct bond.

9. A diene rubber-silica compound as claimed in any one of claims 3 to 8, wherein R¹ is selected from the group consisting of: a mercapto group, a protected mercapto group, a blocked mercapto group, a mono-, di- or poly-sulfidic group, and a group containing a carbon-carbon double bond.

10. A diene rubber-silica compound as claimed in any one of claims 3 to 8, wherein the group -L₂-R¹ is represented by one of the following structures: 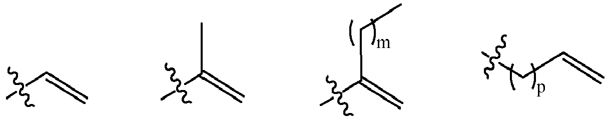 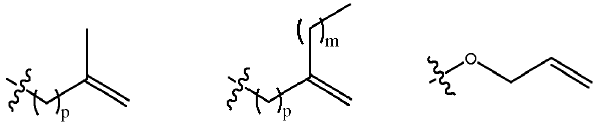 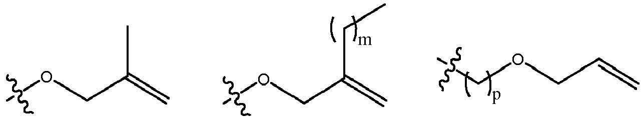 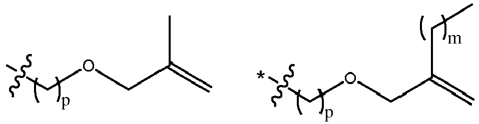 wherein:
p is an integer from 1 to 6, preferably from 1 to 4, e.g. 1 or 2; and
m is an integer from 1 to 6, preferably from 1 to 4, e.g. 1 or 2.

11. A diene rubber-silica compound as claimed in any one of claims 3 to 8, wherein the group -L₂-R¹ is represented by one of the following structures: 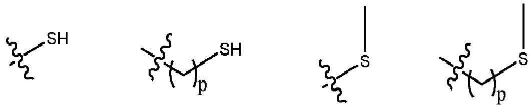 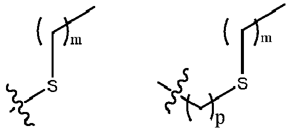 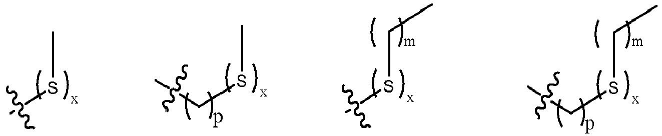 wherein:
x is an integer from 1 to 6, preferably from 1 to 4;
p is an integer from 1 to 6, preferably from 1 to 4, e.g. 1 or 2; and
m is an integer from 1 to 6, preferably from 1 to 4, e.g. 1 or 2.

12. A diene rubber-silica compound as claimed in any one of claims 3 to 8 wherein the group -L₂-R¹ is represented by one of the following structures: 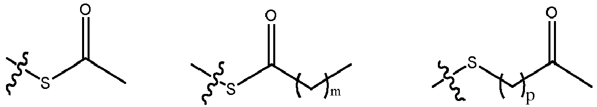 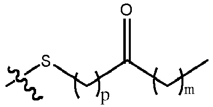 wherein:
p is an integer from 1 to 6, preferably from 1 to 4, e.g. 1 or 2; and
m is an integer from 1 to 8, preferably from 1 to 6, e.g. from 1 to 4.

13. A diene rubber-silica compound as claimed in any one of claims 3 to 8, wherein -L₂-R¹ is selected from vinyl (-CH=CH₂), allyloxy (-O-CH₂-CH=CH₂), thiol (-SH) and methylthiol (-SCH₃).

14. A diene rubber-silica compound as claimed in any one of claims 1 to 13 which is vulcanizable.

15. A vulcanized rubber compound obtained by, directly obtained by, or obtainable by cross-linking a diene rubber-silica compound as claimed in claim 14.

16. A process for producing a diene rubber-silica compound as claimed in any one of claims 1 to 13, said process comprising the steps of:
(i) surface-modifying a silica filler by attachment of a coupling agent which incorporates a dynamic imine bond and which is capable of forming a linkage to a diene rubber matrix during compounding and/or vulcanisation;
(ii) compounding the resulting surface-modified silica filler with a diene rubber matrix whereby to produce a vulcanizable rubber composition; and
(iii) subjecting said vulcanizable rubber composition to vulcanization.

17. A process for producing a diene rubber-silica compound as claimed in any one of claims 1 to 13, said process comprising the steps of:
(i) incorporating a silica filler into a diene rubber matrix, together with one or more compounds capable of reaction with said silica filler to provide a surface-modified silica filler having attached thereto a coupling agent which incorporates a dynamic imine bond and which is capable of forming a linkage to said diene rubber matrix during compounding and/or vulcanisation;
(ii) compounding the resulting composition whereby to produce a vulcanizable rubber composition comprising said surface-modified silica filler; and
(iii) subjecting said vulcanizable rubber composition to vulcanization.

18. A diene rubber-silica compound obtained by, directly obtained by, or obtainable by a method as claimed in claim 16 or claim 17.

19. A vehicle tire component made from a compound as claimed in any one of claims 1 to 15 and 18.

20. A vehicle tire comprising a vehicle tire component as claimed in claim 19.

21. A silica filler which is surface-modified by attachment of a coupling agent capable of forming a reversible linkage to a diene rubber, wherein said coupling agent incorporates a dynamic imine bond.
